(19) Europäisches Patentamt / European Patent Office / Office européen des brevets

(11) **EP 3 046 364 A1**

(12) **EUROPEAN PATENT APPLICATION**
published in accordance with Art. 153(4) EPC

(43) Date of publication:
**20.07.2016 Bulletin 2016/29**

(51) Int Cl.:
**H04W 28/16** (2009.01)

(21) Application number: **13893317.1**

(86) International application number:
**PCT/JP2013/074349**

(22) Date of filing: **10.09.2013**

(87) International publication number:
**WO 2015/037048 (19.03.2015 Gazette 2015/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Fujitsu Limited
Kawasaki-shi, Kanagawa 211-8588 (JP)**

(72) Inventors:
- **KOBAYASHI Akihiro
  Kawasaki-shi
  Kanagawa 211-8588 (JP)**
- **UEDA Satoshi
  Kawasaki-shi
  Kanagawa 211-8588 (JP)**
- **MARUYAMA Hiroaki
  Kawasaki-shi
  Kanagawa 211-8588 (JP)**
- **MIURA Yoshio
  Kawasaki-shi
  Kanagawa 211-8588 (JP)**
- **HASEGAWA Noboru
  Kawasaki-shi
  Kanagawa 211-8588 (JP)**
- **KUNUGI Takeshi
  Kawasaki-shi
  Kanagawa 211-8588 (JP)**

(74) Representative: **Ward, James Norman et al
Haseltine Lake LLP
Bürkleinstrasse 10
80538 München (DE)**

(54) **WIRELESS COMMUNICATION SYSTEM, BASE-STATION DEVICE, AND WIRELESS COMMUNICATION METHOD FOR WIRELESS COMMUNICATION SYSTEM**

(57) A radio communication system including a first and second base stations apparatuses; and a terminal apparatus, wherein the first base station apparatus includes a coordinated communication control unit configured to determine whether or not to provide a coordinated communication service coordinated with the second base station apparatus to a second terminal apparatus, based on information related to communication efficiency acquired according to a position of a first terminal apparatus on performing a coordinated communication to the first terminal apparatus; and a signal processing unit configured to provide the radio communication service to the second terminal apparatus in coordination with the second base station apparatus or without coordination with the second base station apparatus according to the determination.

FIG. 5

**Description**

TECHNICAL FIELD

The embodiments discussed herein are related to a radio communication system, a base station apparatus, and a radio communication method for the radio communication system.

BACKGROUND ART

At present, a radio communication system such as a mobile telephone system and a wireless LAN (Local Area Network) is widely in use. Also, in the field of radio communication, continuous discussion is carried out on next generation communication techniques in order to further improve a communication speed and a communication capacity. For example, in the 3GPP (3rd Generation Partnership Project) which is an association for standardization, the standardization of a communication specification called LTE (Long Term Evolution) and a communication specification called LTE-A (LTE-Advance) based on the LTE has been completed or currently under study.

One of such techniques related to radio communication includes coordinated communication (Coordinated Multi-point (CoMP) transmission and reception; which may hereinafter be referred to as coordinated communication). The coordinated communication is, for example, a technique that a plurality of base stations perform radio communication with a terminal in a cooperative manner. For example, it is possible to improve a throughput and advance communication performance by the execution of the coordinated communication with a terminal which is located in a duplicated region (which may be referred to as a "cell overlap region", for example) between a communicable range (which may be referred to as a "cell" or a "cell range", for example) of one base station and a cell range of another base station.

A typical technique to be used in the coordinated communication includes Coordinated Beam Forming (CB) and Joint Processing (JP). The Coordinated Beam Forming is a technique for radio communication in which a plurality of base stations share information and orient antennas to the terminal direction. Also, the Joint Processing is a technique in which, for example, a plurality of base stations simultaneously transmit signals to a terminal, so that the terminal combines these signals to demodulate.

As one example, according to the Coordinated Beam Forming, the directivity of an antenna of one base station is oriented to the present position of the terminal, while the directivity of an antenna of another base station is oriented to a moving destination to which the terminal moves, so that the directivity of antennas is oriented to different directions in between the base stations to thereby enable the reduction of interference on the terminal.

Also, according to the Joint Processing, for example, a terminal can receive the same signal simultaneously transmitted from a plurality of base stations, to thereby enable the improvement of reception quality in comparison with a case of signal reception transmitted from one base station.

Therefore, the execution of the coordinated communication by means of the Coordinated Beam Forming and the Joint Processing in the base station can reduce interference and improve reception quality, so that can improve a throughput at a terminal which is located in a cell overlap region.

Such a technique related to the coordinated communication includes, for example, such a technique as follows.

Namely, in a communication system which includes a mobile station, a plurality of base stations and a control means, there is a technique in which the control means predicts the position of the mobile station after a predetermined period (a future position), and adaptively changes the directivity of a radio signal radiated from the transmission antenna of each base station according to the future position, so as to perform radio communication with the mobile station. In the above technique, based on the service schedule of a train which a user carrying the mobile station gets on, a time of passing through a cell edge is predicted, so that the start timing of the coordinated communication is determined by use of the predicted time. According to the technique, the directivity of each base station is adaptively changed according to the future position of the mobile station after a predetermined period, not the position of the mobile station at a time point when a coordinated communication execution condition is determined to be satisfied, and thus, it is said that a plurality of base stations can perform radio communication with even a moving mobile station in a coordinated manner.

Also, there is a control apparatus which acquires, from a moving terminal, frequency quality information for each frequency band when the mobile station detects that a difference between a radio wave reception level from a base station currently in connection and a radio wave reception level from another base station becomes smaller than a predetermined value, and acquires frequency idle information from the base stations of a coordination source and a coordination destination, to determine an optimal frequency and transmission timing for coordinated communication between the base stations, on the basis of the frequency quality information and the frequency idle information. In the technique concerned, the start of coordinated communication is determined on detection that the difference between the radio wave reception level from the base station currently in connection and the radio wave reception level from the other base station becomes smaller than the predetermined value. According to the technique, it is possible to provide a radio communication system capable of determining an optimal transmission frequency and notifying the base stations at the coordination source and the coordination destination of the determined transmission frequency, when the coordinated communication is to be performed among a plurality of base stations located at geographically remote places, for example.

CITATION LIST

NON-PATENT DOCUMENT

Non-patent document 1: 3GPP TR36.819 V11.1.0 (2011-12)

PATENT DOCUMENTS

Patent document 1: Japanese Laid-open Patent Publication No. 2012-204971.
Patent document 2: Japanese Laid-open Patent Publication No. 2011-182063.

SUMMARY OF INVENTION

PROBLEMS TO BE SOLVED BY THE INVENTION

However, a radio wave communication state between the terminal and the base station may be changed greatly according to the peripheral environment of the terminal. Therefore, if the coordinated communication is started in response to the detection of the terminal moving to a predetermined region on the basis of a uniform condition such as a service schedule, there may be a case that the advance of communication performance such as an improved throughput is not obtainable. When the radio wave communication state between the terminal and the base station is unstable, it becomes difficult to continue the coordinated communication, which may cause the frequent repetition of processing for starting the coordinated communication and processing for completing the coordinated communication. Such processing may increase a terminal load such as power consumption. Also, the frequent repetition of the processing for starting and completing the coordinated communication may increase the load of a resource on the network side including a base station.
Accordingly, it is an object in one aspect of the embodiment to provide a radio communication system, a base station apparatus, and a radio communication method in the radio communication system, improving communication performance between a base station apparatus and a terminal apparatus.
Also, it is an object in one aspect of the embodiment to provide a radio communication system, a base station apparatus, and a radio communication method in the radio communication system, preventing an increase of power consumption in a terminal apparatus to a certain amount or larger.

MEANS FOR SOLVING THE PROBLEMS

According to an aspect of the embodiments, a radio communication system including: a first and second base stations apparatuses; and a terminal apparatus, wherein the first base station apparatus provides a radio communication service to the terminal apparatus in coordination with the second base station apparatus or without coordination with the second base station apparatus, and the first base station apparatus includes: a coordinated communication control unit configured to determine whether or not to provide a coordinated communication service coordinated with the second base station apparatus to a second terminal apparatus, based on information related to communication efficiency acquired according to a position of a first terminal apparatus on performing a coordinated communication to the first terminal apparatus; and a signal processing unit configured to provide the radio communication service to the second terminal apparatus in coordination with the second base station apparatus or without coordination with the second base station apparatus according to the determination.

ADVANTAGEOUS EFFECTS OF THE INVENTION

It is possible to provide a radio communication system, a base station apparatus, and a radio communication method for a radio communication system, configured to improve communication performance between the base station apparatus and a terminal apparatus. Further, it is possible to provide a radio communication system, a base station apparatus, and a radio communication method in the radio communication system, configured to prevent an increase of power consumption in a terminal apparatus to a certain amount or larger.

BRIEF DESCRIPTION OF DRAWINGS

FIG. 1 is a diagram illustrating a configuration example of a radio communication system.

FIG. 2 is a diagram illustrating a configuration example of a radio communication system.
FIG. 3 is a diagram illustrating a configuration example of a base station apparatus.
FIG. 4 is a diagram illustrating a configuration example of a terminal apparatus.
FIG. 5 is a sequence chart illustrating an operation example when starting the coordinated communication.
FIG. 6 is a flowchart illustrating an example of coordinated communication decision processing.
FIG. 7 is a flowchart illustrating an example of type selection processing.
FIG. 8A and FIG. 8B
are diagrams illustrating examples of data stored in a communication result storage unit, and a speed improvement rate, respectively.

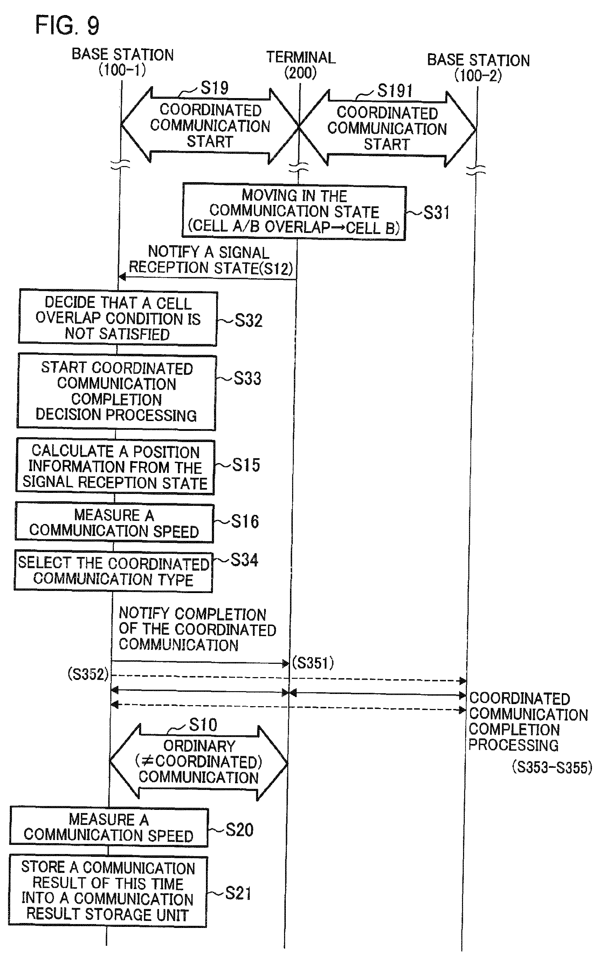

FIG. 9 is a flowchart illustrating an example when the coordinated communication is completed.

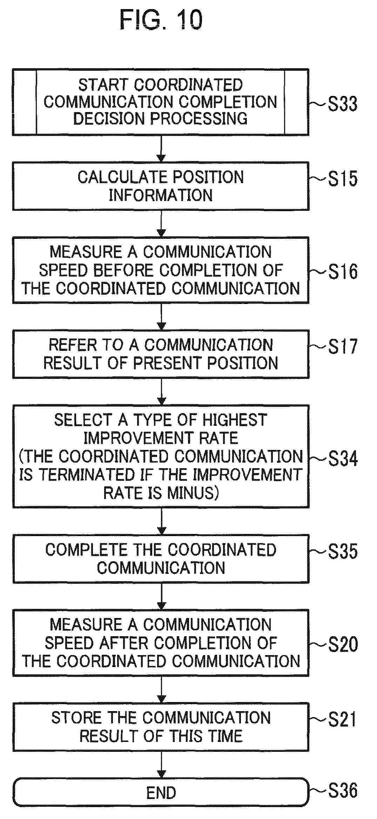

FIG. 10 is a flowchart illustrating coordinated communication completion decision processing.

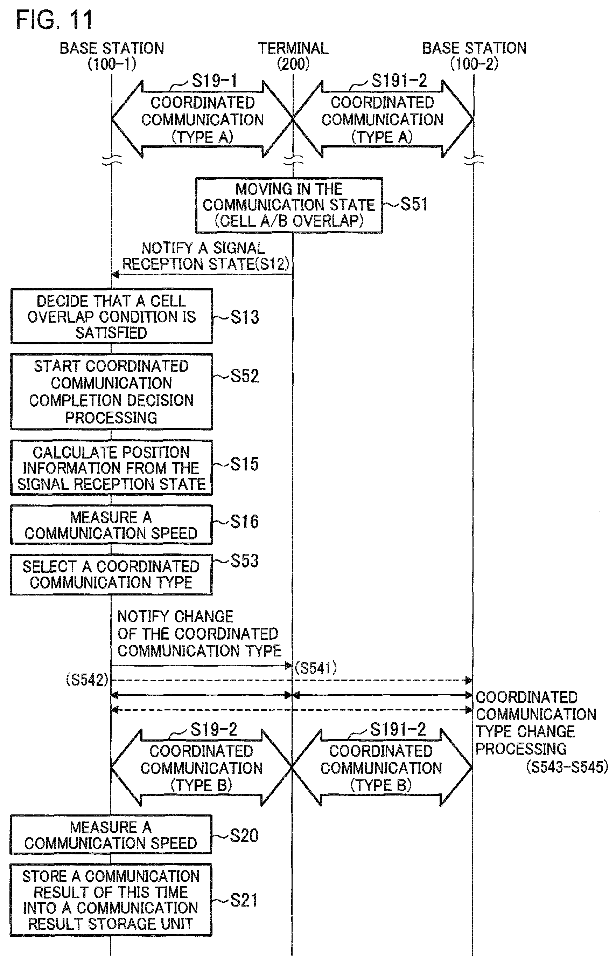

FIG. 11 is a sequence chart illustrating when a coordinated communication type is changed.

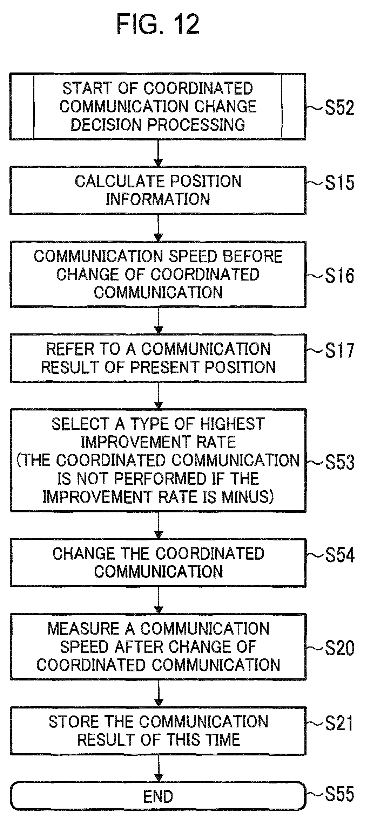

FIG. 12 is a flowchart illustrating an example of coordinated communication change decision processing.

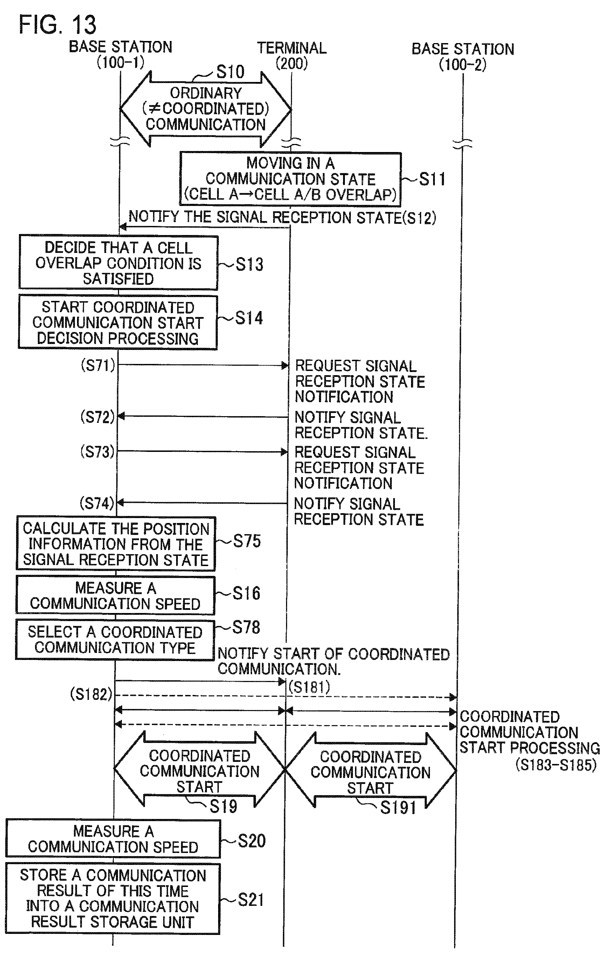

FIG. 13 is a flowchart illustrating an operation example when the coordinated communication is started.

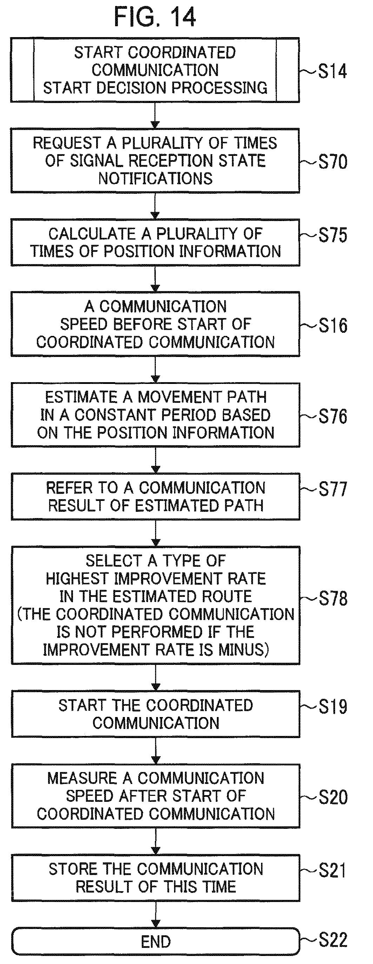

FIG. 14 is a flowchart illustrating an example of coordinated communication start decision processing.

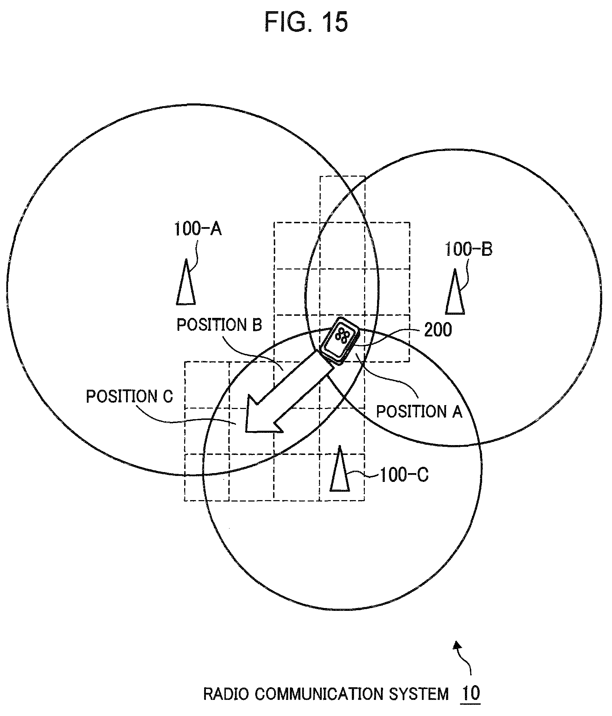

FIG. 15 is a diagram illustrating a state that a terminal moves in a cell overlap region.

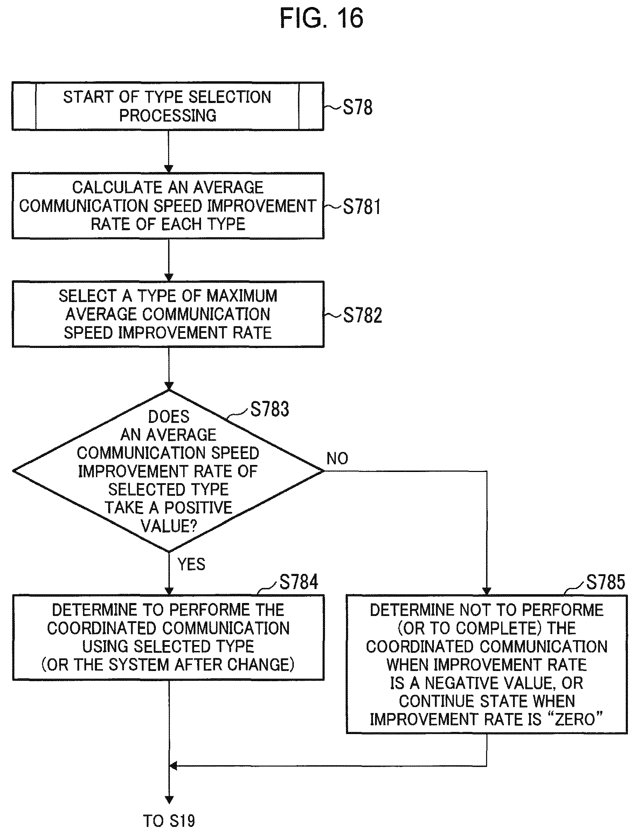

FIG. 16 is a flowchart illustrating an example of type selection processing.

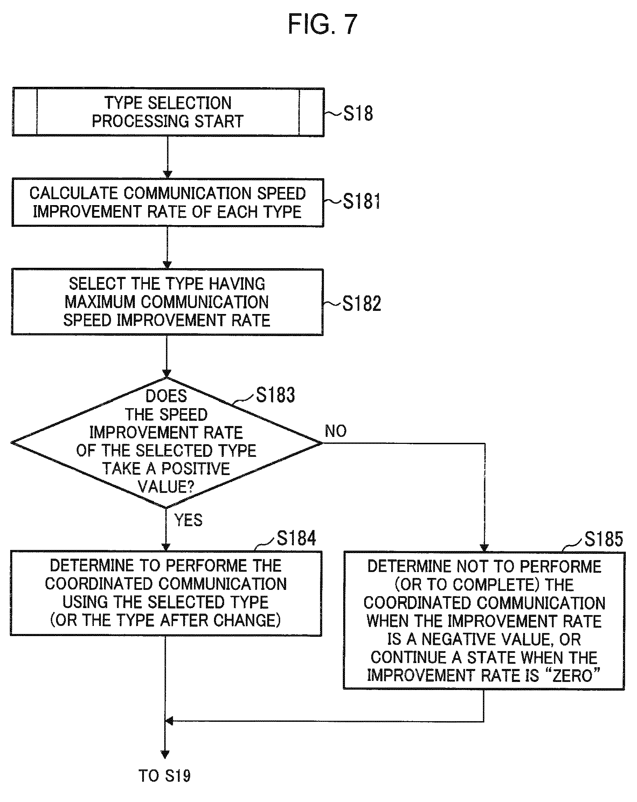

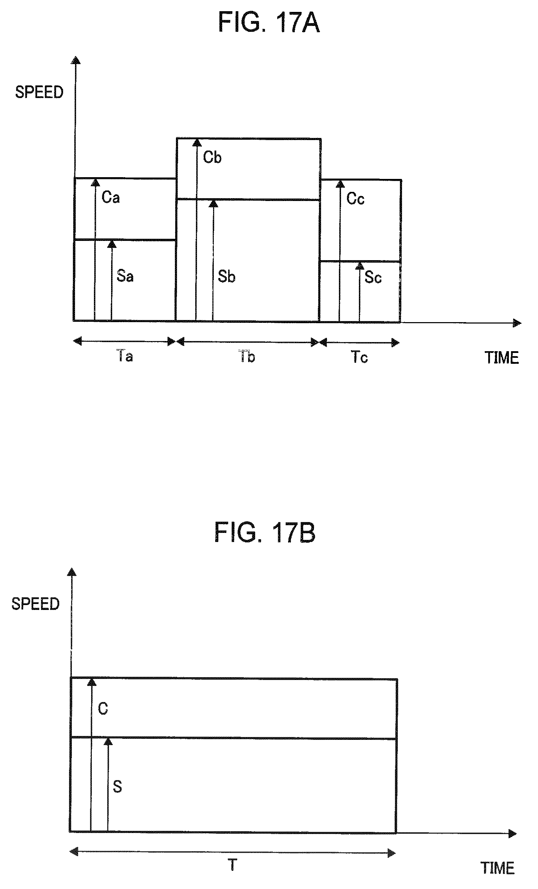

FIG. 17A and FIG. 7B are diagrams graphically illustrating an each average communication speed when the coordinated communication is performed and when the coordinated communication is not performed.

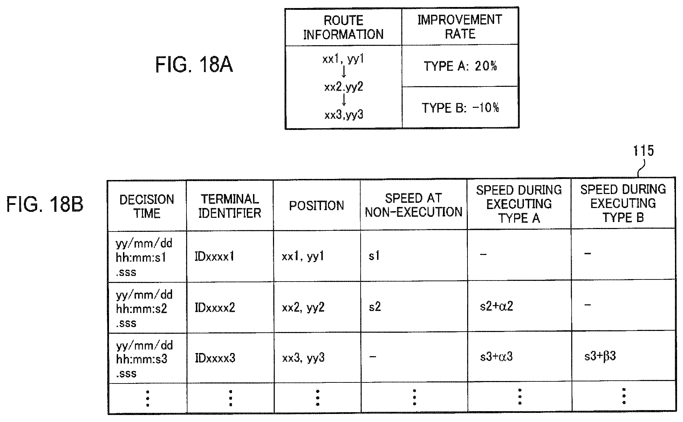

FIG. 18A is a diagram illustrating an example of a speed improvement rate, and FIG. 18B is a diagram illustrating an example of data stored in a communication result storage unit, respectively.

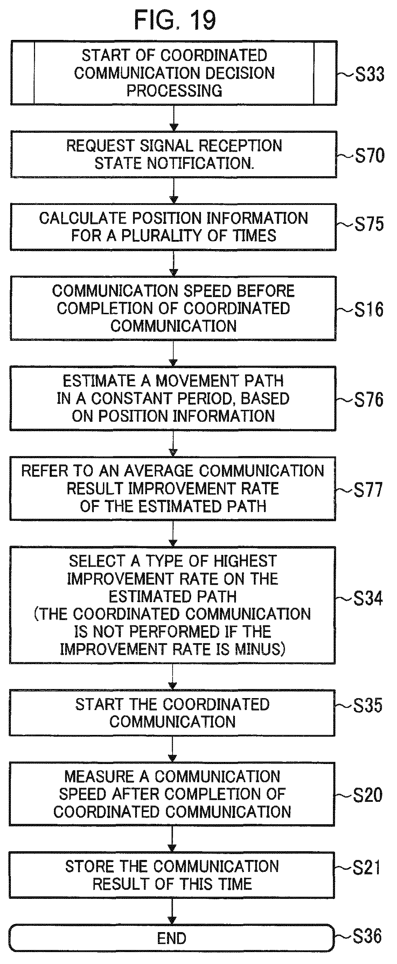

FIG. 19 is a flowchart illustrating an example of coordinated communication completion decision processing.

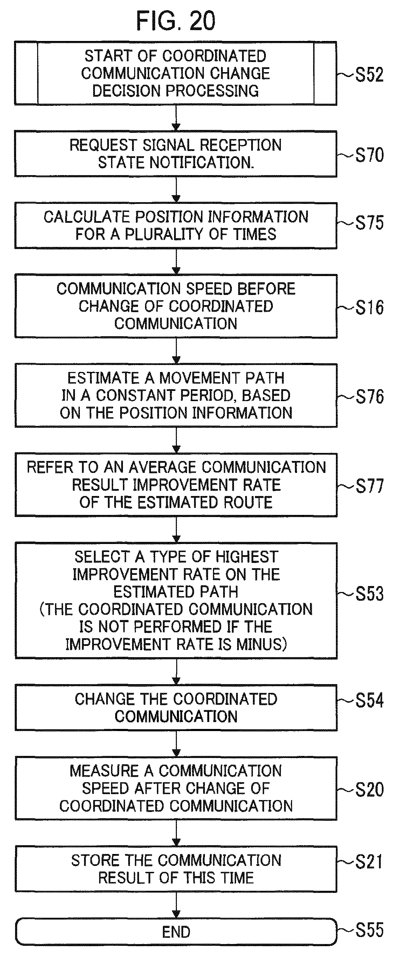

FIG. 20 is a flowchart illustrating an example of coordinated communication change decision processing.

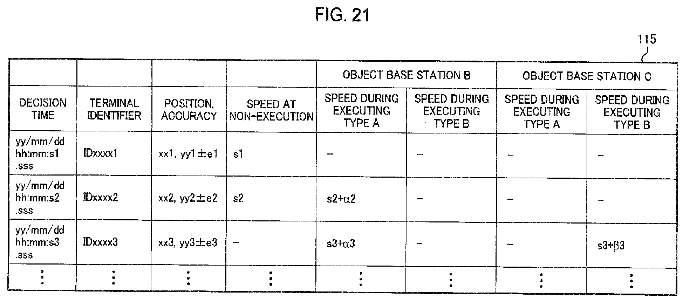

FIG. 21 is a diagram illustrating an example of data stored in a communication result storage unit.

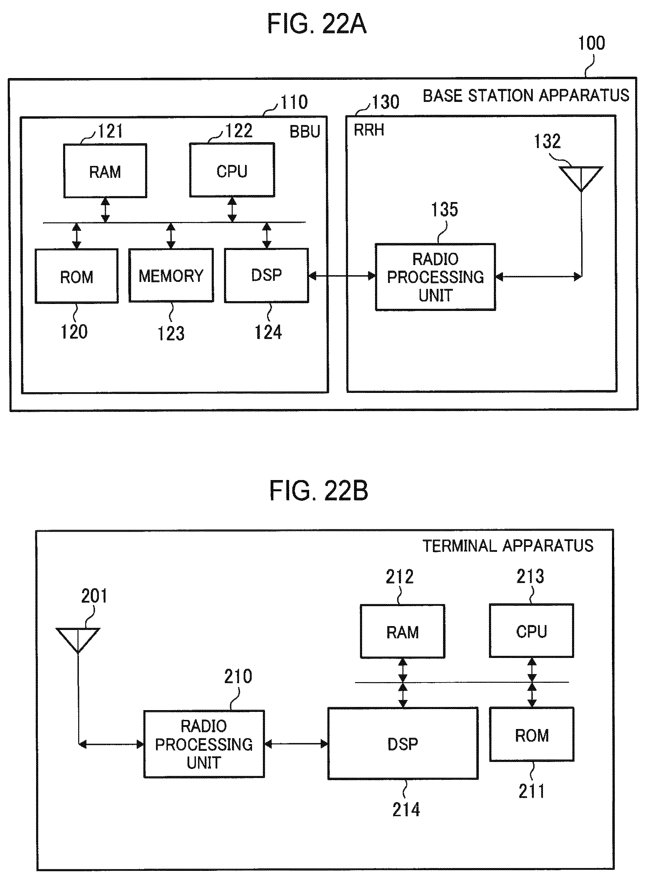

FIG. 22A and FIG. 22B are diagrams illustrating configuration examples of a base station and a terminal, respectively.

DESCRIPTION OF EMBODIMENTS

Hereafter, the present embodiments will be described in detail by reference to the drawings.

[First embodiment]

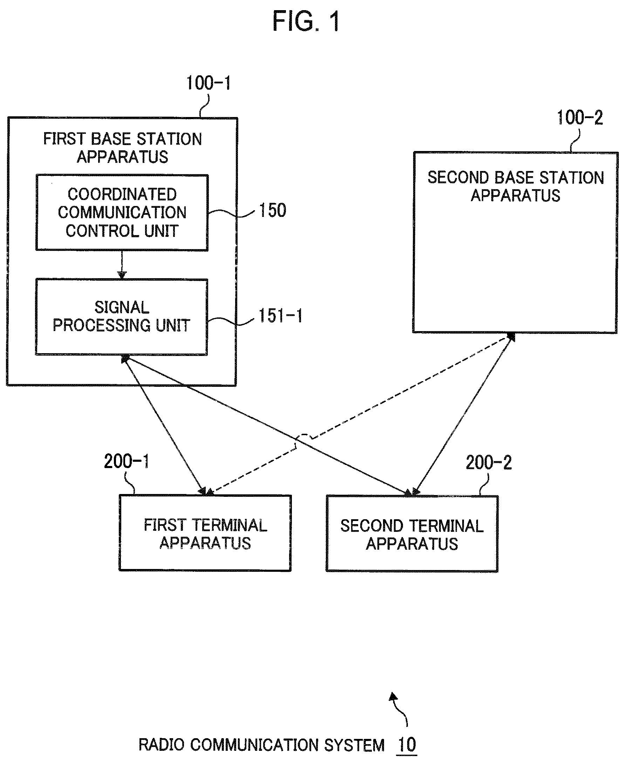

FIG. 1 is a diagram illustrating a configuration example of a radio communication system 10 according to a first embodiment. The radio communication system 10 includes a first and a second base station apparatus 100-1, 100-2 and a first and a second terminal apparatus 200-1, 200-2.

The first base station apparatus 100-1 performs radio communication with a first or a second terminal apparatus 200-1, 200-2 in coordination with a second base station apparatus 100-2. For example, the first base station apparatus 100-1 performs, in coordination with the second base station apparatus 100-2, radio communication with the first or second terminal apparatus 200-1, 200-2 which is located in a duplicated region between the radio communicable region of the self-base station and the radio communicable region of the second base station apparatus 100-2.

The first base station apparatus 100-1 includes a coordinated communication control unit 150 and a signal processing unit 151-1.

The coordinated communication control unit 150 determines whether or not to perform radio communication with the first or second terminal apparatus 200-1, 200-2 in coordination with the second base station apparatus 100-2, on the basis of information related to communication efficiency, which is acquired according to the position of the first terminal apparatus 200-1, when the coordinated communication with the first terminal apparatus 200-1 is performed.

According to the determination, the signal processing unit 151-1 provides a radio communication service to the first or second terminal apparatus 200-1, 200-2 in coordination with the second base station apparatus 100-2 or without coordination.

As the information related to the communication efficiency, for example, there is a communication speed when the coordinated communication is performed.

For example, with regard to whether or not to perform radio communication in coordination, there may be a case that determination is made based on a decision condition using received power strength etc. at the first or second terminal apparatus 200-1, 200-2. In such a case, there may be a case that, depending on the way of setting a set value included in the decision condition, the first or second terminal apparatus 200-1, 200-2 is not located in the duplicated region of the two base stations 100-1, 100-2, although the decision condition is satisfied, for example. Or, if the terminal apparatus is located in the duplicated region of the two base stations 100-1, 100-2, there is a position in which a radio wave state is unstable because of the influence of a peripheral environment etc. Therefore, when the determination is made based on such a decision condition, there may be a case that, a radio wave does not reach the first or second terminal apparatus 200-1, 200-2 if the two base stations 100-1, 100-2 perform communication in coordination, to cause the deterioration of communication performance.

When the coordinated communication is started based on the uniform condition such as the service schedule, there may be a case that, for example, the radio wave condition becomes unstable depending on a radio communication environment, and accordingly it becomes unable to transmit or receive a radio signal if the coordinated communication is started, to cause the deterioration of communication performance.

At the start of the coordinated communication, for example, processing like securing a radio resource and a communication changeover is performed in the base stations 100-1, 100-2. When the start and the completion of the coordinated communication are performed frequently, processing to start the coordinated communication and processing to complete the coordinated communication are repeated a multiplicity of times, causing an increased load at the base stations 100-1, 100-2 and moreover, an increased load also at the terminals 200-1, 200-2.

On the other hand, according to the present first embodiment, the first base station apparatus 100-1 determines whether or not to perform radio communication with the second terminal apparatus 100-2 in coordination, on the basis of information related to communication efficiency which is acquired when performing the coordinated communication with the first terminal apparatus 200-1.

In comparison with a case of determination by the above-mentioned decision condition only or a case of starting the coordinated communication on the basis of the uniform condition only, there is an increased possibility that the first or second terminal apparatus 200-1, 200-2 is located in the duplicated radio communicable region of the two base stations 100-1, 100-2 because the communication result acquired before is taken into account, for example.

Therefore, in comparison with a case that the determination is made by the above-mentioned decision condition only, there is an increased possibility for the first base station 100-1 to perform stable coordinated communication with the terminal apparatus because the communication result acquired before is taken into account, for example.

The present radio communication system 10 can improve communication performance in comparison with the case that the determination is made by the above-mentioned decision condition only. As the communication performance, a throughput, a communication speed, etc. are included, for example.

In the present first embodiment, the first base station apparatus 100-1 may store and retain a table in which information related to communication efficiency, which is acquired according to the position of the first terminal apparatus 200-1, is associated with the position of concern. Also, when determining whether or not to perform the coordinated communication with the second terminal apparatus 200-2, the first base station apparatus 100-1 may determine by acquiring, from the table, information related to communication efficiency according to the position of the second terminal apparatus 200-2, for example.

For example, even in the duplicated radio communicable region of the two base stations 100-1, 100-2, there is a case that a radio communication environment is different dependent on the position of the terminal apparatus, so that a radio wave communication state is different. According to the present first embodiment, it is possible to determine whether or not to perform the coordinated communication in consideration of a communication result according to the position of the terminal apparatus, and therefore, it is also possible to perform the coordinated communication fit to the radio wave state at the position of the terminal apparatus, in comparison with a case of starting the coordinated communication based on only the uniform condition such as the service schedule. Therefore, in the present radio communication system 10, it is possible to improve the communication performance of the terminal 200.

In the present first base station apparatus 100-1, the first base station apparatus 100-1 may determine not to perform the coordinated communication with regard to the second terminal apparatus 200-2 in consideration of a communication result according to the position of the second terminal apparatus 200-2, for example.

In comparison with a case that the coordinated communication is performed frequently, processing to start the coordinated communication etc. is reduced, and an increase of each processing load on the base stations 100-1, 100-2 and the terminals 200-1, 200-2 can be prevented.

In the present radio communication system 10, it is possible to prevent an increase of power consumption in a terminal apparatus located in a region in which the coordinated communication with the two base stations 100-1, 100-2 can be performed.

For the sake of convenience in explanation, the above description is made using the first or second terminal apparatus 200-1, 200-2. However, both apparatuses may be identical one terminal apparatus. According to an aspect that both apparatuses is one terminal apparatus, the first and second terminal apparatuses 200-1, 200-2 are understood by a person skilled in the art to be a single terminal apparatus physically and logically. For example, as information related to the above-mentioned communication efficiency, it may also be possible to use result information which the first base station apparatus 100-1 acquires when executing the coordinated communication before for a terminal apparatus which is an object for deciding whether or not to start the coordinated communication from now on. Even in an aspect in which both apparatuses are the single terminal apparatus, a plurality of terminal apparatuses may be existent in the present radio communication system 10. The same is also applied to the following disclosures.

Alternatively, it may also be possible that the first terminal apparatus 200-1 is a test terminal apparatus, whereas the second terminal apparatus 200-2 is a terminal apparatus for a general user. Or, it may also be possible that the first terminal apparatus 200-1 is a terminal apparatus for a general user, and the second terminal apparatus 200-2 is a terminal apparatus for another general user. The same is also applied to the following disclosures.

In the aspect that the first terminal apparatus 200-1 is the test terminal apparatus, the first base station apparatus 100-1 may determine the start of the coordinated communication with the terminal apparatus 200-1 without taking into account a communication result according to the position of the test terminal apparatus 200-1. For example, the first base station apparatus 100-1 may determine the start of the coordinated communication on the basis of only the position of the test terminal apparatus 200-1. Alternatively, the first base station apparatus 100-1 may determine the start of the coordinated communication on the basis of only the reported value of a radio wave state which is measured by the test terminal apparatus 200-1. Or, the first base station apparatus 100-1 may determine the start of the coordinated communication on the basis of a request from the test terminal apparatus 200-1. Additionally, to decide whether or not the terminal apparatus is a test terminal apparatus, the first base station apparatus 100-1 may use terminal identification information (for example, IMSI (International Mobile Subscriber Identifier), TMSI (Temporary Mobile Station Identifier)). For example, the first base station apparatus 100-1 may store and retain beforehand the terminal identification information which is allocated to the test terminal apparatus, to collate with information received from the terminal apparatus, to thereby discriminate whether or not to be the test terminal apparatus. Or, the first base station apparatus 100-1 may decide whether or not to be the test terminal apparatus according to a battery residual amount in the terminal apparatus. For example, if the battery residual amount in the terminal apparatus is a predetermined value or greater, it may also be possible to determine that the terminal apparatus is to be processed as a test terminal apparatus. The same is also applied to the following disclosures.

[Second embodiment]

Next, a second embodiment will be described.

<Configuration example of radio communication system>

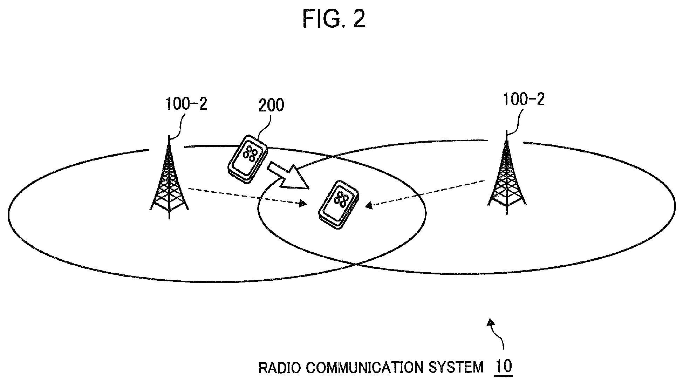

Next, a description will be given on a configuration example of a radio communication system according to a second embodiment. FIG. 2 is a diagram illustrating the configuration example of a radio communication system 10 according to the second embodiment.

The radio communication system 10 includes base station apparatuses (which may hereafter be referred to as base stations) 100-1, 100-2 and a terminal apparatus (which may hereafter be referred to as terminal) 200.

Each base station 100-1, 100-2 is a radio communication apparatus which performs radio communication with the terminal 200 in the communicable region (which may be referred to as a "cell" or a "cell range", for example) of the self-station. The base station 100-1, 100-2 can perform bidirectional communication with the terminal 200 which is located in the cell range.

Namely, the bidirectional communication includes data transmission (or downlink communication) in a direction from the base station 100-1, 100-2 to the terminal 200 and data transmission (or uplink communication) in a direction from the terminal 200 to the base station 100-1, 100-2. The base stations 100-1, 100-2 perform scheduling control etc. to allocate radio resources (for example, a time resource and a frequency resource). The base stations 100-1, 100-2 transmit the allocated radio resources to the terminal 200, as control information. The base stations 100-1, 100-2 and the terminal 200 perform downward communication and upward communication using the radio resources.

Additionally, the two base stations 100-1, 100-2 are connected through a wired channel, so that the base stations 100-1, 100-2 can mutually perform communication therebetween.

Also, as depicted in FIG. 2, each cell range of the two base stations 100-1, 100-2 includes a mutually duplicated region. Such a duplicated radio communicable region may be referred to as a cell overlap region, for example.

The terminal 200 is, for example, a feature phone, a smartphone, a personal computer, an on-vehicle apparatus, or the like, which is a movable radio communication apparatus. The terminal 200 can perform radio communication with each base station 100-1, 100-2 in the cell range of each base station 100-1, 100-2.

Additionally, in the example of FIG. 2, there is illustrated a state that the terminal 200 is moving from the cell range of the base station 100-1 to the cell overlap region of the two base stations 100-1, 100-2.

The two base stations 100-1, 100-2 perform coordinated communication with the terminal 200 which is located in such a cell overlap region. The coordinated communication signifies a technique in which a plurality of base stations 100-1, 100-2 performs radio communication with the terminal 200 in a cooperative manner. The execution of the coordinated communication by the plurality of base stations 100-1, 100-2 enables an improved throughput of the terminal 200, for example.

Additionally, although the radio communication system 10 depicted in FIG. 2 indicates an example of two base stations 100-1, 100-2, three or more base stations may be arranged. Also, with regard to the cell overlap region, although the example depicted in FIG. 2 illustrates an example of formation by two base stations 100-1, 100-2, the cell overlap region may be formed by three or more base stations. Further, with regard to the terminal 200, a plurality of terminals may be arranged, so that the base stations 100-1, 100-2 may also perform the coordinated communication with the plurality of terminals.

<Configuration example of base station apparatus>

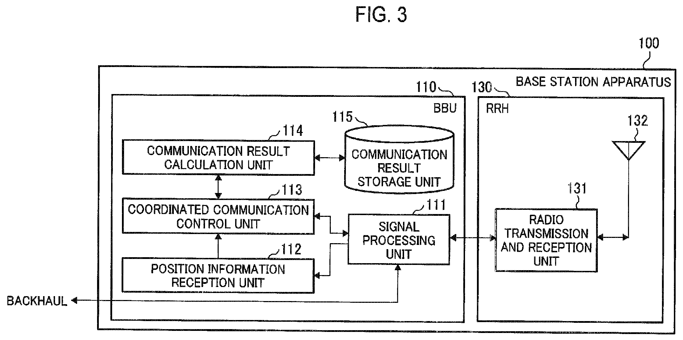

Next, a description will be given on a configuration example of the base stations 100-1, 100-2. Because the configurations of the two base stations 100-1, 100-2 are identical for example, the description will be made as base station 100 unless otherwise stated. FIG. 3 is a diagram illustrating a configuration example of a base station 100.

The base station 100 includes a BBU (Base Band Unit) 110 and an RRH (Remote Radio Head) 130. In the figure, the BBU 110 and the RRH 130 are depicted inside of the base station 100. However, both installation positions may be located geographically remotely (for example, 20 km), and one or a plurality of RRH 130 may be connected to one BBU 110. An example depicted in FIG. 3 is an example that one RRH 130 is connected to one BBU 110. Additionally, the BBU 110 may also be referred to as a Radio Equipment Control, a Digital Unit, etc. The RRH 130 may be an RH (Radio Head) or may also be referred to as Radio Equipment, Remote Radio Equipment, a Radio Unit, a Remote Radio Unit, or the like.

The BBU 110 includes a signal processing unit 111, a position information reception unit 112, a coordinated communication control unit 113, a communication result calculation unit 114 and a communication result storage unit 115. Also, the RRH 130 includes a radio transmission and reception unit 131 and an antenna 132.

Here, the first and second base station apparatuses 100-1, 100-2 in the first embodiment correspond to the base station 100, for example. Also, the coordinated communication control unit 150 in the first embodiment corresponds to the coordinated communication control unit 113, for example, and the first and second signal processing units 151-1, 151-2 in the first embodiment correspond to the signal processing unit 111, for example.

The signal processing unit 111 receives data transmitted from a backhaul (for example, an upper-level apparatus) and performs error correction coding processing and modulation processing on the received data to output to the radio transmission and reception unit 131. Also, the signal processing unit 111 performs demodulation processing and error correction coding processing on a signal output from the radio transmission and reception unit 131, and extracts data etc., to transmit to the backhaul. In the signal processing unit 111, it may also be possible to include an error correction coding circuit and a modulation circuit in order that such error correction coding processing and modulation processing are performed.

Also, the signal processing unit 111 measures, for example, a flow rate of input and output data (or data transmitted and received between with the terminal 200) etc. to measure a communication speed. The detail of the measurement method will be described later. The signal processing unit 111 outputs the measured communication speed to the coordinated communication control unit 113.

Further, for example, when data extracted from the signal which is output from the radio transmission and reception unit 131 is signal reception state data which is measured at the terminal 200, the signal processing unit 111 outputs the data of concern to the position information reception unit 112. The signal reception state data represents, for example, communication quality of a radio section between the terminal 200 and the base station 100 which is measured at the terminal 200. The signal reception state data includes, for example, signal reception state data relative to the base station 100-1 connected to the terminal 200, and signal reception state data relative to the other base station 100-2.

Further, the signal processing unit 111 performs the coordinated communication between with the terminal 200 according to an instruction to perform the coordinated communication, output from the coordinated communication control unit 113. In this case, the instruction also includes an instruction in regard to a type of the coordinated communication, so that the coordinated communication is performed according to the instructed type.

The coordinated communication type includes a plurality of types such as Coordinated Beam forming (CB), Coordinated Scheduling (CS), Joint Processing (JP), for example. There are cases that the three types are instructed respectively as different types, and the Coordinated Beam forming and the Coordinated Scheduling are instructed in a unified manner. It may be possible to have another type than such three types. In the following, a "type A", a "type B", etc. may be referred to as the coordinated communication types.

The signal processing unit 111, on receiving an instruction to perform the Coordinated Beam forming, shares information with a backhaul (for example, another base station) to adjust the directivity of the antenna 132. For example, the signal processing unit 111 weights a signal to be transmitted from the antenna 132, to thereby enable transmitting a radio signal to a direction in which the terminal 200 is located.

Also, on receiving an instruction to perform the Coordinated Scheduling, the signal processing unit 111 receives an available radio resource from a backhaul (for example, another base station), for example, to perform scheduling using the radio resource of the self-station and the received radio resource.

Further, on receiving an instruction to perform the Joint Processing, the signal processing unit 111 transmits data to be transmitted to the terminal 200 to a backhaul (for example, a base station), so as to transmit the same data to the terminal 200 in coordination with another base station.

Based on data related to a signal reception state received from the signal processing unit 111, the position information reception unit 112 discriminates whether or not the terminal 200 is in a cell overlay state (or whether or not a cell overlay condition is satisfied), for example.

For example, the signal reception state data includes signal reception state data relative to another base station 100-2, not only signal reception state data relative to the base station 100-1 of concern. If a difference between the signal reception state data relative to the base station 100 and the signal reception state data relative to the other base station becomes a predetermined value or smaller, the position information reception unit 112 discriminates that the terminal 200 is in the cell overlay state (or the cell overlay condition is satisfied), whereas if otherwise, the position information reception unit 112 discriminates that the terminal 200 is not in the cell overlay state (or the cell overlay condition is not satisfied). The signal reception state data includes a received power strength value measured at the terminal 200 etc., for example. The discrimination of whether or not being in the cell overlay state is made according to a known method based on a difference between the received power strength values of the base station 100-1 which is currently in connection and the other base station 100-2.

Also, the position information reception unit 112, calculates the position of the terminal 200 when discriminating to be in the cell overlay state, on the basis of the position information of the base station 100 and the signal reception state data received from the signal processing unit 111. For example, when the signal reception state data is represented as the received power strength value, the position information reception unit 112 calculates a distance of the terminal 200 from the base station 100 on the basis of a relational expression such that a received power strength value is in inverse proportion to the square of a distance, so as to calculate the position of the terminal 200 on the basis of the distance and the position information of the base station 100. In order to perform such calculation, the position information reception unit 112 retains the relational expression etc. in an internal memory etc., so that can appropriately read out. The position information reception unit 112 outputs the calculated position information of the terminal 200 to the coordinated communication control unit 113.

As the signal reception state data, for example, there is an SIR (Signal to Interference Ratio), a signal reception intensity value, an SIR Indicator, or the like, other than the above-mentioned received power strength value. The SIR and the Indicator are measured at the terminal 200 and received by the position information reception unit 112. The measurement of the SIR and the Indicator will be described later.

Additionally, the position information reception unit 112 can receive GPS (Global Positioning System) data positioned at the terminal 200 from the terminal 200. In this case, the position information reception unit 112, on discriminating to be in the cell overlay state, outputs the received GPS data to the coordinated communication control unit 113. In this case, it is possible to reduce processing in the base station 100 because the position information reception unit 112 is not needed to execute processing for calculating the position of the terminal 200.

Additionally, in the base station 100, the signal reception state data and the GPS data are used to estimate the position of the terminal 200. The signal reception state data and the GPS data may be referred to as data for use for the position estimate of the terminal 200, for example.

The coordinated communication control unit 113, on receiving the position information calculated in the position information reception unit 112 and the communication speed calculated in the signal processing unit 111, temporally stores into an internal memory etc., for example, and after executing processing described later, reads out the position information, the communication speed, etc., to store into the communication result storage unit 115. Here, in FIG. 3, although there is illustrated such a configuration that the coordinated communication control unit 113 stores various types of data into the communication result storage unit 115 by the intermediary of the communication result calculation unit 114, the present embodiment is not limited to such a configuration, namely, the coordinated communication control unit 113 may store the various types of data into the communication result storage unit 115 without the intermediary of the communication result calculation unit 114. The position information, the communication speed etc. are stored into the communication result storage unit 115, as a communication result (or a communication history), for example.

Also, for example, the coordinated communication control unit 113 refers to the communication result stored in the communication result storage unit 115, on the basis of the position information received from the position information reception unit 112. Here, in FIG. 3, although there is illustrated such a configuration that the coordinated communication control unit 113 refers to the communication result, which is stored in the communication result storage unit 115, by the intermediary of the communication result calculation unit 114, the present embodiment is not limited to such a configuration, namely, the coordinated communication control unit 113 may refer to the various types of data from the communication result storage unit 115 without the intermediary of the communication result calculation unit 114.

The coordinated communication control unit 113 determines whether or not to perform the coordinated communication (for example, to start or complete the coordinated communication) using the communication result stored in the communication result storage unit 115. It may be possible, for example, that the coordinated communication control unit 113 receives the speed improvement rate which is calculated in the communication result calculation unit 114, using the communication result stored in the communication result storage unit 115, to determine whether or not to perform the coordinated communication on the basis of the speed improvement rate. Also, when the coordinated communication control unit 113 determines to perform the coordinated communication, it may be possible to determine a coordinated communication type, using the communication result stored in the communication result storage unit 115. The detail of the speed improvement rate and the detail of the determination method will be described later. The coordinated communication control unit 113, on determining the start, the completion, etc. of the coordinated communication, the coordinated communication control unit 113 instructs the signal processing unit 111 to start or complete. Also, when determining to start the coordinated communication, the coordinated communication control unit 113 may indicate, to the signal processing unit 111, the coordinated communication type which is determined using the communication result stored in the communication result storage unit 115.

The communication result calculation unit 114 reads out data related to the communication result from the communication result storage unit 115, to calculate the communication speed improvement rate on the basis of the readout data. The detail of the calculation method etc. will be described later. The communication result calculation unit 114 outputs the calculated speed improvement rate to the coordinated communication control unit 113.

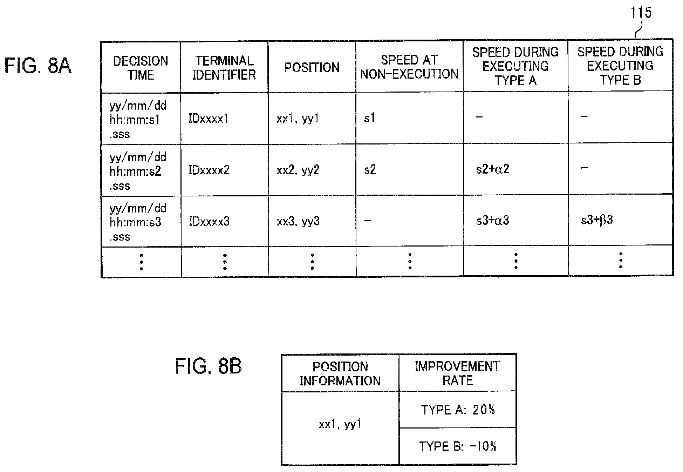

The communication result storage unit 115 stores data related to the communication result. FIG. 8A illustrates an example of data stored in the communication result storage unit 115. As the communication result, though the detail will be described later, data related to radio communication quality, such as a communication speed when executing the coordinated communication and a communication speed when not executing the coordinated communication, is stored. The communication result to be stored in the communication result storage unit 115 may also include position information and time information. For example, the communication result stored in the communication result storage unit 115 may include position information indicative of a position in which the terminal apparatus is existent when data related to the radio communication quality is measured and obtained, or may include time information indicative of time when the data related to the radio communication quality is measured and obtained. Additionally, when obtaining data such as a communication speed, the communication result storage unit 115 stores the data to which each entry is successively added, so as to store all data items related to the communication result. Here, the data related to the communication result stored in the communication result storage unit 115 may be data which is measured between the test terminal apparatus and the base station apparatus and stored in advance, or may be data which is appropriately stored using data measured between the terminal apparatus of the general user and the base station apparatus.

Referring back to FIG. 3, the radio transmission and reception unit 131 perform frequency conversion processing etc. on a signal which is output from the signal processing unit 111, to convert into a radio signal in a radio band and to output the radio signal to the antenna 132. Also, the radio transmission and reception unit 131 receives a radio signal which is output from the antenna 132, to perform frequency conversion processing to convert into a signal in a baseband, so as to output the converted signal to the signal processing unit 111. The radio transmission and reception unit 131 may internally include a frequency conversion circuit, a BPF (Band Pass Filter), etc. in order that such frequency conversion processing etc. can be performed.

The antenna 132 transmits to the terminal 200 the radio signal which is output from the radio transmission and reception unit 131, and outputs to the radio transmission and reception unit 131 the radio signal transmitted from the terminal 200.

<Configuration example of terminal apparatus>

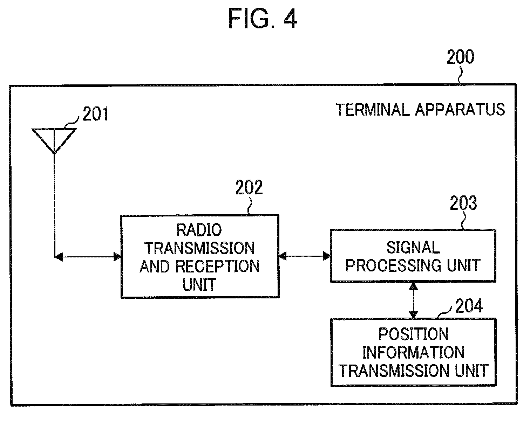

Next, a description will be given on a configuration example of the terminal 200. FIG. 4 is a diagram illustrating a configuration example of the terminal 200. The terminal 200 includes an antenna 201, a radio transmission and reception unit 202, a signal processing unit 203 and a position information transmitter unit 204.

The antenna 201 receives a radio signal transmitted from the base station 100 to output to the radio transmission and reception unit 202, and also transmits to the base station 100 a radio signal output from the radio transmission and reception unit 202.

The radio transmission and reception unit 202 receives the radio signal output from the antenna 201, and performs frequency conversion processing etc. on the radio signal to convert into a baseband signal to output to the signal processing unit 203. Also, the radio transmission and reception unit 202 receives the signal output from the signal processing unit 203 to perform frequency conversion processing etc. to thereby convert into a radio signal in a radio band and output to the antenna 201. The radio transmission and reception unit 202 may internally include a frequency conversion circuit, a BPF (Band Pass Filter), etc. in order that such conversion can be performed.

The signal processing unit 203 performs demodulation processing and error correction decoding processing on the signal received from the radio transmission and reception unit 202, so as to extract data etc. transmitted from the base station 100. The signal processing unit 203 outputs the extracted data etc. to a display unit, a speaker, etc., so that can perform image display and voice output. Also, the signal processing unit 203 receives from the position information transmitter unit 204 data related to a signal reception state, to perform error correction coding processing and modulation processing on the data, to output to the radio transmission and reception unit 202. The signal processing unit 203 may internally include a demodulation circuit, an error correction decoding circuit, etc. in order that such demodulation processing, error correction decoding processing, etc. can be performed.

The position information transmitter unit 204, for example, measures a signal reception state on the basis of a signal (for example, a known signal etc.) which is transmitted from the base station 100, to generate signal reception state data. The signal reception state data is used to calculate position information in the base station 100 as described earlier. The signal reception state data includes, in addition to the above-mentioned received power strength value, an SIR, an indicator thereof, etc., for example. Here, the position information transmitter unit 204 measures a signal reception state of another base station 100-2, not only the base station 100-1, to generate the signal reception state data of the plurality of base stations 100-1, 100-2.

Further, the position information transmitter unit 204 may also transmit GPS data. In this case, the position information transmitter unit 204 positions the terminal 200 using a GPS antenna (for example, an antenna which is disposed inside of the position information transmitter unit 204), to transmit the positioned position information (or GPS data) to the base station 100.

<Operation example>

Next, an operation example in the radio communication system 10 will be described. As to the operation example, there are two operation examples, namely an operation example when the base station 100 does not confirm whether or not the terminal 200 is moving, and an operation example when the base station 100 confirms whether or not the terminal 200 is moving. The former operation example is simpler than the latter operation example because a processing count in the former operation example is smaller than in the latter operation example. Hereafter, the former will be described as an operation example 1, whereas the latter will be described as an operation example 2.

Further, as to each operation example 1, 2, there are operation examples when starting the coordinated communication, completing the coordinated communication, and changing the coordinated communication type. These operation examples will be described separately for each operation example 1, 2. More specifically, the description will be given in the following order.

<1-1. Operation example when starting the coordinated communication in the operation example 1 (when not confirming whether or not the terminal 200 is moving)>
<1-2. Operation example when completing the coordinated communication in the operation example 1>
<1-3. Operation example when changing the coordinated communication type in the operation example 1>
<2-1. Operation example when starting the coordinated communication in the operation example 2 (operation example when confirming whether or not the terminal 200 is moving)>
<2-2. Operation example when completing the coordinated communication in the operation example 2>
<2-3. Operation example when changing the coordinated communication type in the operation example 2>

<1-1. Operation example when starting the coordinated communication in the operation example 1 (when not confirming whether or not the terminal 200 is moving)>

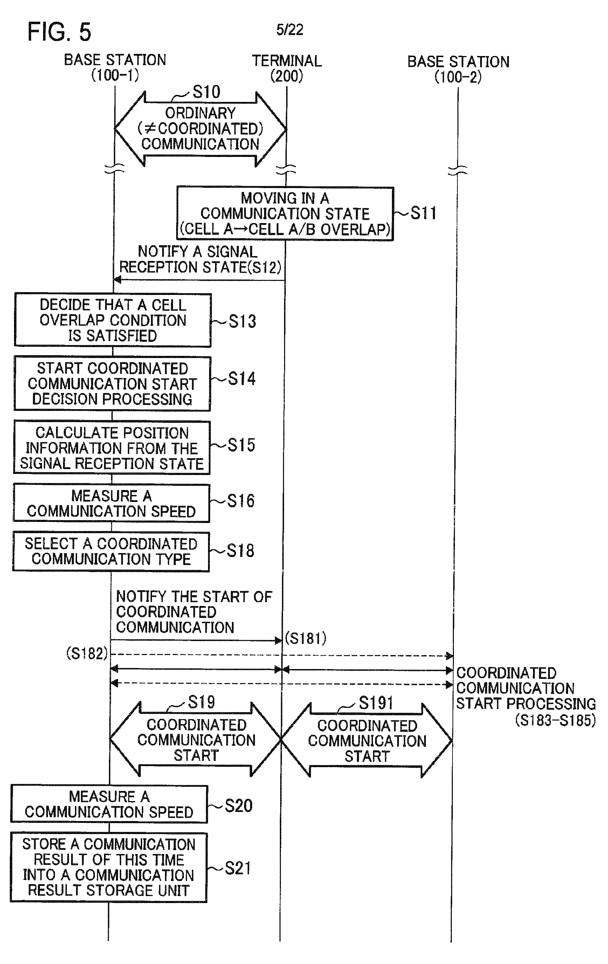

First, a description will be given on an operation example when starting the coordinated communication in the operation example 1. FIG. 5 through FIG. 8B are diagrams for describing the present operation example. Among the figures, FIG. 5 illustrates a sequence chart of the present operation example. Here, the sequence chart depicted in FIG. 5 illustrates, as depicted in FIG. 2 for example, an operation example when the terminal 200 performs radio communication with the base station 100-1 while located in a cell range of the base station 100-1, and thereafter moves to a cell overlap region.

As depicted in FIG. 5, the base station 100-1 is executing ordinary radio communication, which is not the coordinated communication, with the terminal 200 (S10). The terminal 200 then moves, in a communication state, to a cell overlap region of two base stations 100-1, 100-2 (S11).

Next, the terminal 200 notifies the base station 100-1 of data related to a signal reception state (S12). For example, the position information transmitter unit 204 of the terminal 200 receives each radio signal transmitted from the base station 100-1 and the base station 100-2, to measure each signal reception state and transmit the signal reception state data to the base station 100-1 currently in connection. For example, the position information transmitter unit 204 periodically measures the signal reception state, and after the measurement, transmits to the base station 100-1 the signal reception state data of each base station 100-1, 100-2.

The base station 100-1, on receiving the signal reception state data, discriminates whether or not a cell overlap condition is satisfied on the basis of the data concerned (S13). In the present operation example, the base station 100-1 performs the following processing on assumption that the cell overlap condition is satisfied. For example, the position information reception unit 112 discriminates that the cell overlap condition is satisfied if a difference in the data related to each signal reception state at the two base stations 100-1, 100-2 is smaller than a predetermined value.

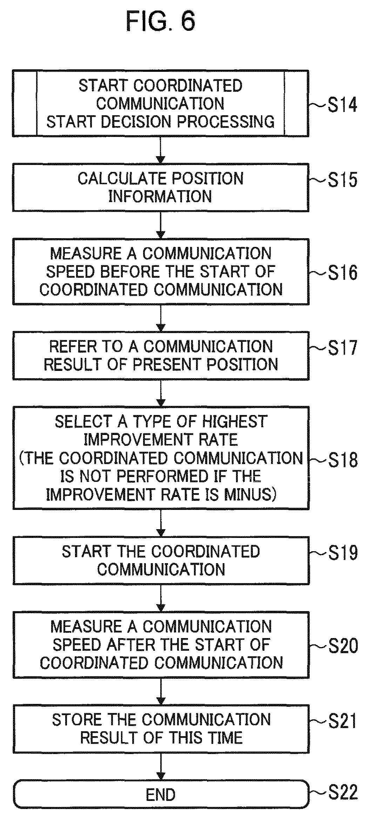

On discriminating the cell overlap condition is satisfied, the base station 100-1 starts coordinated communication start decision processing for deciding whether or not coordinated communication with the terminal apparatus is to be started (S14). FIG. 6 is a flowchart illustrating an example of the coordinated communication decision processing. Although there is processing which is partially duplicated with a sequence chart depicted in FIG. 5, a description will be given by use of FIG. 6.

The base station 100-1, when starting the coordinated communication start decision processing (S14), calculates position information in order to estimate a position in which the terminal 200 is existent, using data received from the terminal apparatus, for example (S15).

For example, as described above, the position information reception unit 112 calculates the position of the terminal 200 on the basis of the signal reception state data which is transmitted from the terminal 200 and the position information of the base station 100-1, so as to estimate the position in which the terminal 200 is existent. As to a position estimation method (S15) in which the terminal 200 is located, it may be possible to receive from the terminal 200 position information obtained by the GPS, to determine to be the position information of the terminal 200. For example, the position information reception unit 112 calculates (xx1, yy1), as the position of the terminal 200.

Additionally, the position information of the base station 100-1 is the position information of the self-base station 100-1 measured in advance, which is stored in the internal memory etc. of the position information reception unit 112, for example, and appropriately read out at processing. It may be possible that the base station 100-1 includes a GPS module, for example, so that position information which is calculated by receiving a radio signal from a satellite may be used as position information indicative of a position in which the base station 100-1 is existent.

Next, the base station 100-1 measures a communication speed before the start of the coordinated communication (S16). As a method for measuring the communication speed, there is a method as follows, for example.

Namely, the signal processing unit 111 measures a data amount on which an ACK signal (Acknowledge signal) is received from the terminal 200 for a predetermined time period, among data transmitted to the terminal 200, to thereby measure the communication speed.

Alternatively, the signal processing unit 111 may measure the communication speed by receiving data transmitted from the terminal 200 and measuring, for a predetermined time period, an amount of data which is successfully decoded accurately through error correction decoding.

Or, it may also be possible to measure the communication speed by measuring a data amount of data which the signal processing unit 111 outputs to the radio transmission and reception unit 131 or a data amount of data output to a backhaul, for a predetermined time period. Or, the signal processing unit 111 may measure the communication speed on the basis of a data amount of the terminal 200 which is allocated to a radio resource. In this case, the allocation of the radio resource is performed by a scheduler etc., so that the signal processing unit 111 can measure the communication speed by receiving the allocation information from the scheduler.

Next, the base station 100-1 refers to the communication result of the present position (S17). For example, the coordinated communication control unit 113 refers to data stored in the communication result storage unit 115 through the communication result calculation unit 114, using the position information of the terminal 200, which is received from the position information reception unit 112, as a search key. For example, the reference is made for each entry which is coincident with the position (xx1, yy1) of the terminal 200, or each entry which includes position information in a constant range from the position (xx1, yy1).

Now, the detail of the communication result storage unit 115 will be given using FIG. 8A. The communication result storage unit 115 includes each area of "decision time", terminal identifier", "position", "speed at non-execution", "speed during executing the type A" and "speed during executing the type B".

In the "decision time", for example, the time when the coordinated communication type is selected (for example, S18 in FIG. 5 and FIG. 6) and the time when storing into the communication result storage unit 115 (for example, S21 in FIG. 5 and FIG. 6) are stored in the area of the "decision time": For example, the coordinated communication control unit 113, with the provision of a timer, stores the time measured by the timer into the "decision time".

The "terminal identifier" is, for example, an identifier which is given on the basis of each terminal 200 and which the base station 100-1 can acquire from the terminal 200 when communicating with the terminal 200 (for example, S12).

In the "position the position information of the terminal 200 which is calculated in the position information reception unit 112 is stored.

In the "speed at non-execution", for example, each communication speed when the coordinated communication is not perform is stored. For example, a communication speed which is measured in the signal processing unit 111 before the start of the coordinated communication etc. is stored.

In the "speed during executing the type A", for example, each communication speed when the coordinated communication is performed by the type A is stored. Also, in the "speed during executing the type B", for example, each communication speed when the coordinated communication is performed by the type B is stored. The respective communication speeds are measured in the signal processing unit 111, for example, in a similar manner to the communication speed measured before the start of the coordinated communication etc.

Additionally, the communication speed during the execution of the coordinated communication which is stored in the communication result storage unit 115 may be referred to as, for example, information related to communication efficiency. In the example of FIG. 8, the information related to communication efficiency corresponds to, for example, the "speed during executing the type A" and the "speed during executing the type B". The information related to the communication efficiency is stored in the communication result storage unit 115 according to the position where the coordinated communication is performed.

For example, the "speed at non-execution", the "speed during executing the type A" and the "speed during executing the type B" are calculated in the signal processing unit 111, and temporarily stored into the internal memory etc. in the coordinated communication control unit 113, and stored in the communication result storage unit 115 at the timing of S21 as depicted in FIG. 5 and FIG. 6. Also, the "decision time", the "position", the "terminal identifier" etc. are temporarily stored in the coordinated communication control unit 113 etc., and stored in the communication result storage unit 115 at the timing of S21. Data stored in the "decision time", the "terminal identifier", the "position", the "speed at non-execution", the "speed during executing the type A", the "speed during executing the type B", etc. are stored in the communication result storage unit 115 as each communication result (or communication history).

The above information stored in the communication result storage unit 115 includes an entry related to the terminal 200 of which position information is calculated (S15 in FIG. 6), and also an entry related to another terminal.

Referring back to FIG. 6, next, the base station 100-1 calculates a speed improvement rate to select a type having the highest speed improvement rate (S18). FIG. 7 is a flowchart illustrating an example of such type selection processing (S18).

The base station 100-1, on starting the type selection processing (S18), calculates a communication speed improvement rate (S181). The calculation method of the communication speed improvement rate will be described in the following. For example, there are the following two calculation methods.

<Calculation method 1 of the communication speed improvement rate>

First, the base station 100-1 determines an entry, which is referred to in the processing of S17, to be object data. For example, the communication result calculation unit 114 reads out a constant number of items (100 items etc., for example) in order from the nearest position of the terminal 200 (xx1, yy1) to the farthest, from the communication result storage unit 115 as the object data.

Then, among the object data, the communication result calculation unit 114 extracts an entry in which a communication speed s1 at the non-execution of the coordinated communication and a communication speed $(s1+\alpha 1)$ at the execution of the coordinated communication by the type A are stored, and calculates an improvement rate RA1 by

$$RA1 = (s1 + \alpha 1)/s1.$$

Here, $\alpha 1$ can take any of a positive value and a negative value. For example, a case when $\alpha 1$ is negative represents that, if the coordinated communication is performed, the communication speed is reduced as compared to the case of non-execution of the coordinated communication, whereas a case when $\alpha 1$ is "0" represents that, if the coordinated communication is performed, the communication speed is not changed from the case of non-execution.

The communication result calculation unit 114 calculates RA2, RA3, RAn (n is the number of data items) in a similar manner to the case of calculating RA1, and calculates a communication speed improvement rate RA in the type A by

$$RA = (RA1 + RA2 + ... + RAn)/n.$$

The communication speed improvement rate RA represents a ratio with regard to the degree of improvement in the communication speed when the coordinated communication is performed by the type A at the position (xx1, yy1) (or in the vicinity thereof), for example, based on the past result.

Also, the communication result calculation unit 114 calculates a communication speed improvement rate RB of the type B in a similar manner to the case of the communication speed improvement rate RA of the type A, and further, when there are other types C, D, ..., the calculation is made in a similar manner.

<Calculation method 2 of the communication speed improvement rate>

In the above case also, for example, the communication result calculation unit 114 reads out from the communication result storage unit 115 a constant number of items (100 items etc., for example) in order from the nearest position of the terminal 200 (xx1, yy1) to the farthest, as object data.

The communication result calculation unit 114 calculates, for the readout object data, an average communication speed S of speeds s1, s2, s3, ..., sn at the non-execution of the coordinated communication, using $S=(s1+s2+s3+...+sn)/n$ where n represents the number of data items at the non-execution of the coordinated communication.

Next, the communication result calculation unit 114 calculates an average communication speed SA of coordinated communication execution speeds $s1+\alpha 1$, $s2+\alpha 2$, $s3+\alpha 3$, ..., $sn+\alpha n$ by the type A among the object data, at the execution of the coordinated communication by the type A, using

$$SA=(s1+a1+s2+a2+s3+a3+...+sn+an)/nA$$

where nA is the number of data items in the type A.

Then, the communication result calculation unit 114 calculates a communication speed improvement rate RA by the type A, using

$$RA=SA/S.$$

In this case also, the communication speed improvement rate RA represents a ratio based on the past result, with regard to the degree of improvement in the communication speed when the coordinated communication is performed by the type A at the position (xx1, yy1) (or in the vicinity thereof), for example.

With regard to a communication speed improvement rate by the type B also, the communication result calculation unit 114 performs calculation in a similar manner to the case of the communication speed improvement rate by the type A, and further performs calculation when there are other types C, D, ..., in a similar manner.

In the above, the examples of the calculation methods of the communication speed improvement rate have been described. In the calculation method 1, each entry in which both a communication speed at the non-execution of the coordinated communication and a communication speed by the type A are stored is determined as object data. On the other hand, in the calculation method 2, each entry in which either one of a communication speed at the non-execution of the coordinated communication and a communication speed by the type A is stored is determined as object data. For example, as compared to the calculation method 1, the calculation method 2 enables improved accuracy of the speed improvement rate if past communication results (or communication result histories) at the vicinity of the position of the terminal 200 are smaller in number than a predetermined value.

Referring back to FIG. 7, next, the base station 100-1 selects a type in which the communication speed improvement rate becomes maximum (S182). For example, the coordinated communication control unit 113 receives from the communication result calculation unit 114 the calculated speed improvement rate of each type, to select a type which provides the largest speed improvement rate. FIG. 8B is a diagram illustrating an example of the speed improvement rate at the position (xx1, yy1). In the example of FIG. 8B, the coordinated communication control unit 113 selects the type A.

Next, the base station 100-1 discriminates whether or not the speed improvement rate of the selected type takes a positive value (S183). If the speed improvement rate of the selected type takes a positive value (Yes in S183), the base station 100-1 determines to perform the coordinated communication by the selected type A (S184).

The positive value of the speed improvement rate signifies that a communication speed when the coordinated communication is performed is higher than a communication speed when the coordinated communication is not performed. Accordingly, for example, the base station 100-1 discriminates to be Yes in S813 if the execution of the coordinated communication with the base station 100-2 produces a higher communication speed than when not executing the coordinated communication with the base station 100-2, so that the base station 100-1 determines to perform the coordinated communication.

In this case, for example, it is predicted that the execution of the coordinated communication by the selected type produces a higher communication speed as compared to a case when the coordinated communication is not performed, so that an improved throughput can be achieved. For example, in the example of FIG. 8B, the coordinated communication control unit 113 determines to perform the coordinated communication using the type A because the speed improvement rate of the selected type A takes a positive value.

On the other hand, if the speed improvement rate of the selected type is not a positive value (No in S183), the base station 100-1 determines not to perform the coordinated communication (S185).

For example, when the maximum value of the speed improvement rate takes a negative value, a decreased throughput is predicted because of the decrease of the communication speed if the coordinated communication is performed, and therefore, the coordinated communication control unit 113 determines not to perform the coordinated communication.

The negative value of the speed improvement rate occurs if a communication speed when the coordinated communication is performed is lower than a communication speed when the coordinated communication is not performed. Accordingly, the base station 100-1 determines not to perform the coordinated communication if a communication speed when executing the coordinated communication with the base station 100-2 becomes lower than a communication speed when not executing the coordinated communication with the base station 100-2 (No in S183), for example (S185).

Meanwhile, when the speed improvement rate of the selected type is "0" (No in S183), the base station 100-1 continues the state of the base station 100 (S185). The speed improvement rate of "0" occurs if a communication speed when the coordinated communication is performed is the same as a communication speed when the coordinated communication is not performed. For example, if the coordinated communication is currently in execution, the base station 100-1 continues the execution, whereas if the coordinated communication is not in execution, the base station 100-1 continues the non-execution.

On determination of the execution or non-execution of the coordinated communication and the type when executing the coordinated communication (S184, S185), the base station 100-1 shifts to S19 in FIG. 6 and starts the coordinated communication.

At this time, the base station 100-1 notifies the terminal 200 of the start of the coordinated communication (S181 in FIG. 5). Also, the base station 100-1 notifies the other base station 100-2, which forms a cell overlap region, of the start of the coordinated communication (S182). On receipt of the above notification, the start processing of the coordinated communication is performed between the base station 100-1 and the terminal 200, between the base station 100-2 and the terminal 200, and between the two base stations 100-1, 100-2 (S183-S185). For example, in the start processing of the coordinated communication, the base station 100-1 notifies the terminal 200 and the base station 100-2 of the determined type of the coordinated communication. By this, the signal processing unit 111 of the base station 100-1 and a signal processing unit of the base station 100-2, on receiving the notification of the selected type, prepare to start the coordinated communication.

Then, the coordinated communication is performed between the two base stations 100-1, 100-2 and the terminal 200 using the selected type (S19 (S19 in FIG. 6), S191).

The base station 100-1, after starting the coordinated communication, measures a communication speed in the selected type (S20, S20 in FIG. 6). In regard to the measurement, similar to S16, a communication speed is measured by the measurement of a data flow rate in the signal processing unit 111, for example. In this case also, the coordinated communication control unit 113 temporarily stores the communication speed received from the signal processing unit 111 into the internal memory etc.

Next, the base station 100-1 reads out the temporarily stored communication speed (S16, S20), the position information (S15), the terminal identifier, etc. to store into the communication result storage unit 115 (S21, S21 in FIG. 6). For example, the coordinated communication control unit 113 reads out the communication speed (S16, S20), the position information (S15), the terminal identifier, etc. which are stored in the internal memory etc., to store into the communication result storage unit 115 through the communication result calculation unit 114. The above information is stored into the communication result storage unit 115 as the communication result of this time, for example. By the storage of such information, for example, the information of the "decision time", the "terminal identifier", the "speed at non-execution", etc. are stored in the communication result storage unit 115, as depicted in FIG. 8A.

Then, the base station 100-1 completes a series of processing (S22 in FIG. 6).

<1-2. Operation example when completing the coordinated communication in the operation example 1>

Next, a description will be given on an operation example when completing the coordinated communication in the operation example 1 (when not confirming whether or not the terminal 200 is moving). The present operation example is an example in which, when the coordinated communication is in execution, the coordinated communication is completed if the maximum value of the calculated speed improvement rate takes a negative value, for example. FIGS. 9 and 10 are diagrams for describing the present operation example. Among them, FIG. 9 is a sequence chart of the present operation example, and FIG. 10 is a flowchart of an example of coordinated communication completion decision processing.

As depicted in FIG. 9, the two base stations 100-1, 100-2 and the terminal 200 are executing the coordinated communication by the type A (S19, S191). Also, the terminal 200 moves in a communication state, and is moving from the cell overlap region of the two base stations 100-1, 100-2 to the cell region of the base station 100-2 (S31).

The terminal 200, when moving from the cell overlap region to the cell region of the base station 100-2, notifies the base station 100-1 of data related to a signal reception state (S12).

Next, the base station 100-1 decides a cell overlap condition, and in this case, discriminates that the cell overlap condition is not satisfied (S32). For example, the position information reception unit 112 discriminates that the cell overlap condition is not satisfied because of deciding that a difference in signal reception state data relative to the two base stations 100-1, 100-2 exceeds a predetermined value.

The base station 100-1, on discriminating that the cell overlap condition is not satisfied, starts the coordinated communication completion decision processing (S33). FIG. 10 is a flowchart illustrating an example of the coordinated communication completion decision processing. The same symbols are given to the same processing as the coordinated communication start decision processing (for example, FIG. 6).

The base station 100-1 calculates the position information of the terminal 200, measures a communication speed when executing the coordinated communication, and refers to a communication result at the calculated position (S15-S17).

Then the base station 100-1 calculates the speed improvement rate of each type, to select a type of the highest speed improvement rate (S34). In the present operation example also, the base station 100-1 performs type selection processing (for example, FIG. 7) and calculates the speed improvement rate of each type, resulting in that the maximum communication speed improvement rate takes a negative value, not a positive value (No in S183).

In such a case, the base station 100-1 determines to complete the coordinated communication currently in execution, because the communication speed decreases if the coordinated communication is performed (S185). In other words, for example, when the base station 100-1 is executing the coordinated communication with the base station 100-2, the base station 100-1 completes the coordinated communication currently in execution if the communication speed when executing the coordinated communication with the base station 100-2 becomes lower than a case when executing radio communication without coordination with the base station 100-2.

Referring back to FIG. 10, on determining the completion of the coordinated communication (S34), the base station 100 completes the coordinated communication (S35). In this case, the base station 100 notifies the terminal 200 and the base station 100-2 of the completion of the coordinated communication (S351, S352 in FIG. 9). Then, the completion processing of the coordinated communication between the base station 100-1 and the terminal 200, between the base station 100-2 and the terminal 200 and between the base stations 100-1, 100-2 is performed (S353-S355).

On completion of the coordinated communication, the base station 100-1 performs ordinary radio communication with the terminal 200 (S10).

Next, the base station 100 measures a communication speed when the coordinated communication is not performed (S20), to store into the communication result storage unit 115 as a communication result of this time (S21). In this case, for example, a speed by the type A (S16 in FIG. 9) and a communication speed (S20) when the coordinated communication is not performed are stored, as the same entry, into the communication result storage unit 115.

Referring back to FIG. 10, the base station 100 completes a series of processing (S36).

<1-3. Operation example when changing the coordinated communication type in the operation example 1>

Next, a description will be given on an operation example when a coordinated communication type is changed in the operation example 1 (when not confirming whether or not the terminal 200 is moving). FIGS. 11 and 12 are diagrams for describing the present operation example. In these figures, FIG. 11 illustrates a sequence chart of the present operation example, whereas FIG. 12 illustrates a flowchart of an example of coordinated communication change decision processing.

As depicted in FIG. 11, the two base stations 100-1, 100-2 and the terminal 200 are executing the coordinated communication by the type A (S19-1, S191-1). Further, the terminal 200 in a communication state moves in the cell overlap region (S51).

The terminal 200, during moving in the cell overlap region, notifies data related to a signal reception state (S12).

The base station 100-1 receives the notification of the signal reception state data to discriminate whether or not the cell overlap condition is satisfied. In the present operation example, processing proceeds on assumption that the cell overlap condition is satisfied.

The base station 100-1, when the cell overlap condition is satisfied when executing the coordinated communication, starts the coordinated communication completion decision processing (S52).

FIG. 12 is a flowchart illustrating an operation example of the coordinated communication change decision processing. In the coordinated communication change decision processing (for example, FIG. 6), the same symbols are given to the same processing.

The base station 100-1 calculates the position of the terminal 200 (S15), and measures a communication speed before the change of the communication type (S16) to refer to a communication result corresponding to the calculated position (S17).

Next, the base station 100-1 calculates a speed improvement rate to select a type of which speed improvement rate is the highest (S53). In the present operation example also, the base station 100 performs type selection processing (for example, FIG. 7), to calculate the communication speed improvement rate of each type. The calculation method of the speed improvement rate is similar to the method described in the aforementioned <1-1. Operation example when starting the coordinated communication in the operation example 1>, for example.

In the present operation example, there is selected the type of the highest communication speed improvement rate, which is different from the type by which the coordinated communication is in execution (S184). For example, when the base station 100-1 is executing the coordinated communication by the type A, there is selected the type B of the highest communication speed improvement rate, or the like. In such a case, the base station 100-1 changes the coordinated communication type, so as to perform the coordinated communication by the type B.

For example, the coordinated communication control unit 113 selects the type to be applied to perform the coordinated communication, on the basis of the communication speed improvement rate of each type calculated in the communication result calculation unit 114, so as to select the type different from the type having been applied so far. By the type change, for example, the improvement of the communication speed is predicted from the past communication result, so that an improved throughput can be achieved.

Referring back to FIG. 12, after selecting the type, the base station 100-1 performs the coordinated communication using the type after the change (S54). At this time, as depicted in FIG. 11, the base station 100-1 notifies the terminal 200 and the base station 100-2 that the type for the coordinated communication has been changed (S541, S542). Then, processing for changing the coordinated communication type is performed between the base station 100-1 and the terminal 200, between the base station 100-2 and the terminal 200 and between the base stations 100-1, 100-2 (S543-S545). In the example depicted in FIG. 11, the change from the type A to the type B is notified to the base station 100-2 and the terminal 200, so that the coordinated communication is performed using the type B.

Thereafter, the base station 100-1 measures a communication speed after the type change, to store into the communication result storage unit 115 together with the communication speed before the change etc. (S20, S21).

Then, the base station 100-1 completes a series of processing (S55 in FIG. 12).

<2-1. Operation example when starting the coordinated communication in the operation example 2 (when confirming whether or not the terminal 200 is moving)>

Next, a description will be given on an operation example when starting the coordinated communication in the operation example 2. FIG. 13 through FIG. 17B are diagrams for use to describe the present operation example. In the present operation example, the base station 100-1 receives from the terminal 200 the notification of data related to a signal reception state for a plurality of times to estimate a movement path of the terminal 200, and from the communication result of the estimated movement path, the base station 100-1 calculates the speed improvement rate of each method and selects the coordinated communication type.

FIG. 13 is diagram illustrating a sequence chart of the present operation example in the radio communication system 10. The same symbols are given to the same processing as the operation example (for example, FIG. 5) of <1-1. Operation example when starting the coordinated communication in the operation example 1 (when not confirming whether or not the terminal 200 is moving)>.

The base station 100-1 performs ordinary radio communication, which is not the coordinated communication, with the terminal 200 (S10), which, in a communication state, moves to the cell overlap region of the two base stations 100-1, 100-2 (S11).

Then, the terminal 200 notifies the base station 100-1 of signal reception state data (S12), and based on the signal reception state data, the base station 100-1 decides that the cell overlap condition is satisfied (S13). On deciding that the cell overlap condition is satisfied, the base station 100-1 starts coordinated communication start decision processing (S14).

FIG. 14 is a flowchart illustrating an example of the coordinated communication start decision processing in the present operation example. The same symbols are given to the same processing as the coordinated communication start decision processing (for example, FIG. 7) in <1-1. Operation example when starting the coordinated communication in the operation example 1 (when not confirming whether or not the terminal 200 is moving)>.

The base station 100, on starting the coordinated communication start decision processing (S14), requests the terminal 200 to notify the signal reception state data for a plurality of times (S70).

For example, the position information reception unit 112 discriminates that the cell overlap condition is satisfied based on the signal reception state data which is received from the signal processing unit 111, and taking the opportunity of the above discrimination, generates and transmits a message for requesting the terminal 200 to transmit the notification of the signal reception state data for a plurality of times. In the example depicted in FIG. 13, there are requested the notifications of the signal reception state data for two times, and in response to the above requests, the terminal 200 transmits the signal reception state data to the base station 100-1 twice (S71-S74).

Referring back to FIG. 14, next, the base station 100 calculates position information for a plurality of times (S75). As the calculation method of the position information, similar to the aforementioned <1-1. Operation example when starting the coordinated communication in the operation example 1 >, the position information reception unit 112 calculates the position of the terminal 200 on the basis of the signal reception state data and the position information of the base station 100-1, for example. Because of receiving the signal reception state data for a plurality of times, the position information reception unit 112 calculates the position information based on the respective data to calculate the position information for the plurality of times.

Next, the base station 100 measures a communication speed before the start of the coordinated communication (S16), and estimates the movement path of the terminal 200 based on the position information (S76). The estimation of the movement path is carried out in the following manner, for example.

Namely, the position information reception unit 112 may determine a route which is produced by connecting positions, which are obtained from a several multiple of each difference of the plurality of times of calculated position information, to be a movement path. For example, assume position information calculated for the first time to be a position A (xx1, yy1), position information calculated for the second time to be a position B' (xx1+$\delta$, yy1+$\delta$), and position information calculated for the third time is a position C' (xx1+$\Delta$, yy1+$\Delta$). In this case, the position information reception unit 112 multiplies a difference between the positions A, B', and a difference between the positions B', C' by 10, respectively, and can determine a route which passes through the position A (xx1, yy1), a position B (xx1+10$\delta$, yy1+10$\delta$) and a position C (xx1+10$\Delta$, yy1+10$\Delta$) to be a movement path.

FIG. 15 illustrates an example of the estimated movement path. Here, the example of FIG. 15 illustrates an example of the radio communication system 10 in which three base stations 100-A to 100-C are disposed. In the above example, there is illustrated an example of a movement path of the terminal 200 from the position A which is located in the cell overlap region of the three base stations 100-A to 100-C, to the positions B, C which are located in the cell overlap region of the two base stations 100-A, 100-B.

In regard to the movement path estimation method, the above-mentioned example is one example, and it may also be possible to estimate the movement path by, for example, a publicly known method such that the calculated position information is compared with the history of the movement path, and based on the above comparison result, the movement path of the terminal 200 is estimated, and so on.

Referring back to FIG. 14, next, the base station 100-1 refers to the communication result of the estimated movement path (S77). For example, the coordinated communication control unit 113 accesses the communication result storage unit 115 through the communication result calculation unit 114, to refer to the communication result corresponding to the movement path.

Additionally, in addition to the position information, the ratio of a stay time staying at the position of concern is included in the data of the movement path, for example. The stay time ratio represents the ratio of the stay time of the terminal 200 at each position when the overall estimation period is defined to be "1". In the above-mentioned example, when the positions A, B, C are calculated from the positions A, B', C', when letting the overall estimation period be "1", the stay time ratio of the position A is "1/3", the stay time ratio of the position B is "1/3" and the stay time ratio of the position C is "1/3". The above-mentioned example is an exemplary case when the terminal 200 is moving at the positions A, B', C' successively. However, there is a case of a stay at the position B' for a predetermined time, and in such a case, the calculation of the position information B' is made for a plurality of times, and the ratio of the stay time becomes different according to such calculation. Such a stay time ratio is calculated in, for example, the position information reception unit 112 or the coordinated communication control unit 113 after receiving the data of the estimated route from the position information reception unit 112.

Next, the base station 100-1 selects the type of the highest speed improvement rate among the estimated routes (S78). In the present operation example also, the base station 100-1 performs type selection processing at the selection. FIG. 16 is a flowchart illustrating an operation example of the type selection processing in the present operation example. The same symbols are given to the same processing as the type selection processing (for example, FIG. 7) in <1-1. Operation example when starting the coordinated communication in the operation example 1>.

The base station 100-1, on starting the present processing (S78), calculates an average communication speed improvement rate of each type (S781).

The calculation of the average communication speed improvement rate is carried out in the following manner, for example. Namely, the communication result calculation unit 114 reads out from the communication result storage unit 115 each communication speed Sa, Sb, Sc at each position A, B, C when the coordinated communication is not performed, and also each communication speed Ca, Cb, Cc at each position A, B, C when the coordinated communication is performed by using the type A. Also, the communication result calculation unit 114 receives each stay time ratio Ta, Tb, Tc at each position A, B, C, from the coordinated communication control unit 113.

Incidentally, in the communication result storage unit 115, the extraction of each entry which is coincident with each position A, B, C, or located within a predetermined distance therefrom, for a predetermined number of items (for example, 100 items) is similar to the above-mentioned case of <1-1. Operation example when starting the coordinated communication in the operation example 1>.

The communication result calculation unit 114 calculates an average communication speed S when the coordinated communication is not performed and an average communication speed C when the coordinated communication is performed, by using

$$S=(Sa \cdot Ta + Sb \cdot Tb + Sc \cdot Tc),$$

$$C=(Ca \cdot Ta + Cb \cdot Tb + Cc \cdot Tc).$$

Then, the communication result calculation unit 114 calculates an average communication speed improvement rate RA by the type A, using

$$RA = C/S.$$

FIG. 17A is an example of illustrating in a graphic form each average communication speed S, C when the coordinated communication is not performed and when the coordinated communication is performed, in which the vertical axis represents the communication speed and the horizontal axis represents the stay time. Also, FIG. 7B is an example of illustrating the average communication speed improvement rate RA in a graphic form. As depicted in the above figures, the average communication speed improvement rate RA=C/S represents, based on the past communication history, a radio of the degree of improvement of the average communication speed obtained on the estimated movement path by the execution of the coordinated communication, relative to the average communication speed when the coordinated communication is not performed, for example.

As for the type B, the type C, etc., the communication result calculation unit 114 also calculates each average communication speed improvement rate RB, RC, ... , similarly to the type A.

Referring back to FIG. 16, next, the base station 100-1 selects a type of the maximum average communication speed improvement rate (S782), and if the average communication speed improvement rate of the selected type takes a positive value (Yes in S783), the base station 100-1 determines to perform the coordinated communication using the selected type (S784).

FIG. 18A is a diagram illustrating an example of the speed improvement rate. In this example, the type of the maximum average communication speed is the "types A" and the average communication speed of the type A is a positive value, and therefore, the execution of the coordinated communication by the type A is determined.

In other words, for example, the base station 100-1 determines to perform the coordinated communication if the average value of the communication speed when executing the coordinated communication by the type A at each position on the estimated route is higher than the average value of the communication speed when performing radio communication without executing the coordinated communication at each position on the estimated route.

For example, the coordinated communication control unit 113 receives from the communication result calculation unit 114 the average communication speed improvement rate of each type, to select the type in which the average communication speed improvement rate becomes maximum. Then, if the above average communication speed improvement rate takes a positive value, the coordinated communication control unit 113 determines to perform the coordinated communication using the selected type, and instructs the signal processing unit 111 to perform the coordinated communication using the selected type.

On the other hand, if the average communication speed improvement rate of the selected type is not a positive value but a negative value (No in S783), the base station 100-1 determines not to perform the coordinated communication because it is not hopeful to improve the communication speed if negative coordinated communication is performed (S785).

Meanwhile, when the average communication speed improvement rate of the selected type is "0", the base station 100-1 continues the current state. For example, if the coordinated communication is currently in execution, the base station 100-1 continues the coordinated communication type which is currently in execution, whereas if the coordinated communication is not performed, continues the non-execution of the coordinated communication.

Referring back to FIG. 14, the base station 100-1 starts the coordinated communication (S19). In this case, the base station 100 notifies the terminal 200 and the base station 100-2 of the start of the coordinated communication, similarly to the aforementioned <1-1. Operation example when starting the coordinated communication in the operation example 1> (S181, S182 in Fig. 13).

Next, the start processing of the coordinated communication is performed among the base station 100, the terminal 200 and the base station 100-2 (S183-S185).

Next, the base station 100 measures a communication speed after the start of the coordinated communication (S20), and stores the measured communication speed (S16. S20) etc. into the communication result storage unit 115 (S21). FIG. 18B illustrates an example of data described in the communication result storage unit 115 when an entry is newly added.

Then, the base station 100 completes a series of processing (S22 in FIG. 14).

<2-2. Operation example when completing the coordinated communication in the operation example 2>

Next, a description will be given on an operation example when completing the coordinated communication in the operation example 2 (an operation example when confirming whether or not the terminal 200 is moving).

In the present operation example, the calculation method of an average communication speed improvement rate of each method can be performed in a similar manner to <2-1. Operation example when starting the coordinated communication in the operation example 2>. Other processing can be performed in a similar manner to <1-2. Operation example when completing the coordinated communication in the operation example 1>, for example.

The present operation example will be described using the sequence chart depicted in FIG. 9. The base station 100-1, on receiving the notification of signal reception state data, discriminates that the cell overlap condition is not satisfied (S12, S32). Then, the base station 100-1 starts coordinated communication completion decision processing (S33).

FIG. 19 is a flowchart illustrating an example of the coordinated communication completion decision processing in the present operation example. From S70 to S77, the processing is similar to the example of the coordinated communication start decision processing (for example, FIG. 14) in <2-1. Operation example when starting the coordinated communication in the operation example 2>.

The base station 100-1 selects the type of the highest average communication speed improvement rate. However, the base station 100-1 completes the coordinated communication because the selected average communication speed improvement rate takes a negative value and therefore it is not hopeful to improve the communication speed if the coordinated communication is continued (S34, and S785 in FIG. 16). Thereafter, processing similar to the operation example (for example, FIG. 10) in <1-2. Operation example when completing the coordinated communication in the operation example 1> is executed (S20-S36 in FIG. 19).

<2-3. Operation example when changing the coordinated communication type in the operation example 2>

Next, a description will be given on an operation example when changing the coordinated communication in the operation example 2 (operation example when confirming whether or not the terminal 200 is moving).

In the present operation example, the calculation method of an average communication speed improvement rate of each method can be executed in a similar manner to <2-1. Operation example when starting the coordinated communication in the operation example 2>. Other processing can be executed in a similar manner to <1-3. Operation example when changing the coordinated communication in the operation example 1>, for example.

The present operation example will be described using the sequence chart of FIG. 11. The base station 100-1, on receiving the notification of signal reception state data, discriminates that the cell overlap condition is satisfied (S12, S13). Then, the base station 100-1 starts coordinated communication change decision processing (S52).

FIG. 20 is a flowchart illustrating an example of the coordinated communication change decision processing in the present operation example. From S70 to S77, the processing is similar to the example of the coordinated communication start decision processing (for example, FIG. 14) in <2-1. Operation example when starting the coordinated communication in the operation example 2>.

The base station 100-1 selects the type of the highest average communication speed improvement rate. The average communication speed improvement rate of the selected type is a positive value, and the selected type is a different type from the type of the coordinated communication performed so far (S54, and S784 in FIG. 16). Thereafter, processing similar to the operation example (for example, FIG. 12) of <1-3. Operation example when changing the coordinated communication type in the operation example 1> is executed (S54-S55 in FIG. 20).

<Regarding operation in communication result calculation unit>

Next, a description will be given on other operation in the communication result calculation unit 114. In the above-mentioned operation example, the possibility/impossibility of the coordinated communication is discriminated based on the past communication result (or the history of the communication result), for example.

However, at the discrimination, there may be a case of a situation change that surrounds the base station 100, such as the change of building and transportation surrounding the base station 100 or a change of the disposition of another base station, which causes a different situation from when the communication result is stored. In such a case, for example, the base station 100 may be incapable of calculating a correct communication speed improvement rate.

To cope therewith, in the communication result calculation unit 114, it may be possible to appropriately select data to be a calculation object of the communication speed improvement rate, so as to obtain correct object data and a communication speed improvement rate and efficient processing, according to such conditions as described below.

(a) Exclude data after the lapse of a constant period from the object

For example, in the communication result calculation unit 114, data in which past one week or more elapse at the time of calculation is excluded from calculation object data. Among data stored in the communication result storage unit 115, there is a region of the "decision time" (for example, FIG. 8A), and therefore, in the communication result calculation unit 114, as compared to the calculation time of a communication speed improvement rate (or an average communication speed improvement rate), data in which a constant time or longer elapses is excluded from the object data, so that data within a constant period is determined to be the object data. In this case, it may be possible for the communication result calculation unit 114 to process, such as delete, data stored in the communication result storage unit 115, for example.

(b) Restrict the number of data to a constant number.

As described in the above-mentioned operation example, because entries are successively added to the communication result storage unit 115 and all data items are stored, the number of object data is limited to a constant number, such as past 100 items, for example.

Further, it may also be possible that a count area of the number of times, which is used at the calculation of the communication speed improvement rate etc., is included in the communication result storage unit 115, so that data included in each entry in which the number of times of concern is more than and including a predetermined number is excluded from the processing object. In this case, the communication result calculation unit 114 may delete each entry of an excessive number of times from the communication result storage unit 115.

As such, by the restriction of the number of data to a constant number, the communication result storage unit 115 can achieve higher speed processing in comparison with a case that all data are included in the object, for example.

(c) Weight data.

For example, in the above-mentioned operation example, when the average communication speed improvement rate is calculated (for example, S781 in FIG. 16), a larger weight is given to new data than to old data on the basis of the time of calculation. This enables the calculation of the average communication speed improvement rate in a closer situation to the surrounding situation of the base station 100 at the time of calculation, for example.

For example, based on the calculation time, let data in the past 72 hours be counted as the object, and let $Ra$ be a data contribution ratio (or weighting coefficient) in the past 0-24 hours, $Rb$ be a data contribution ratio in the past 24-48 hours, and $Rc$ be a data contribution ratio in the past 48-72 hours, then, using

$$S=(Ra \cdot Sa \cdot Ta + Rb \cdot Sb \cdot Tb + Rc \cdot Sc \cdot Tc) \text{ and}$$

$$C=(Ra \cdot Ca \cdot Ta + Rb \cdot Cb \cdot Tb + Rc \cdot Cc \cdot Tc),$$

it is possible to calculate a communication speed $S$ when the coordinated communication is not performed and a communication speed $C$ (of a certain type) when the coordinated communication is performed.

Such weighting is performed in the communication result calculation unit 114, for example, and may be performed when the communication speed improvement rate is calculated (for example, S181 in FIG. 7) and for the number of use times as described in the above (b).

Such weighting enables prompt reflection of data, which is used more frequently, in the calculation of the average communication speed and the communication speed. On the other hand, it may also be possible to exclude data, of which the number of use times is smaller than and including a constant, from the object data.

(d) Restrict data according to a time zone.

For example, there is a case that a communication state is different according to each time zone (for example, in the morning, daytime, evening and night). Accordingly, when calculating the communication speed improvement rate and the average communication speed improvement rate, it is also possible to restrict data which is included in the same time zone as a time zone of the calculation time. In this case, if the time of the calculation is 9 AM, for example, it may be possible for the communication result calculation unit 114 to determine data in the time zone of 8 AM to 10 PM to be object data. As such, the communication result calculation unit 114 may determine, as object data, the data included within a constant time before and after the decision time. This enables high speed and efficient processing.

(e) Make calculation impossible when the number of object data is a constant number or smaller.

If the number of object data is a constant number or smaller, it is supposed that the communication speed improvement rate and the average communication speed improvement rate become incorrect. Therefore, in such a case, the communication result calculation unit 114 outputs to the coordinated communication control unit 113 that the calculation is impossible.

In this case, the coordinated communication control unit 113 performs the coordinated communication by giving preference on the type in which calculation becomes impossible. This causes the storage of a communication result by the type, in which calculation becomes impossible, into the communication result storage unit 115, and accordingly, the number of object data by the type of concern is increased, so that can contribute to the decision on the possibility/impossibility of the execution of the coordinated communication in the future.

Further, the coordinated communication control unit 113 continues the coordinated communication when receiving impossible calculation during the execution of the coordinated communication. In this case, for example, the calculation becomes impossible only because the number of object data stored in the communication result storage unit 115 is a constant number or smaller, although the terminal 200 is moving in the cell overlap region. Therefore, the base station 100 continues the type of the coordinated communication which is currently in execution, without completing or changing the coordinated communication.

(f) Performs the coordinated communication forcibly.

For example, as depicted in FIG. 8B, with regard to the "type B", the communication speed improvement rate is "-10%" even if processing is executed for a plurality of times on the same condition. In such a case, the coordinated communication by the type B is not performed indefinitely. For example, when the coordinated communication control unit 113 makes the decision of not executing the coordinated communication continuously for a constant number, it may also be possible for the coordinated communication control unit 113 to determine to forcibly perform the coordinated communication by using the type which is decided not to be performed. In the above example, the coordinated communication control unit 113 determines to perform the coordinated communication using the type B. This enables refreshing the communication result data of the type, for example, and enables contribution to the discrimination of the possibility/impossibility of the coordinated communication in the future.

(g) Store an average value etc. into the communication result storage unit 115.

In the above-mentioned example, it is described that, when the calculation of the speed improvement rate is made, for example, entries of all items are added and stored into the communication result storage unit 115. It may also be possible that, for the position information etc., a representative value (which may be a center position causing an average value or any other positions) in a predetermined square is stored in the communication result storage unit 115, for example. It may also be possible that, by the definition of a predetermined section, not limited to a square, a representative value, an average value thereof or the like is stored in the communication result storage unit 115.

In this case, for example, when the calculated position of the terminal 200 is located within the square, the coordinated communication control unit 113 stores the representative value in the square into the communication result storage unit 115.

This enables, for example, the base station 100-1 to extract object data at high speed, as compared to a case that the entries of all items are stored in the communication result storage unit 115, and enables the decision processing of the possibility/impossibility of the coordinated communication etc. at high speed.

As described above, according to the present second embodiment, for example, the base station 100 is configured to determine whether or not to perform the coordinated communication, on the basis of information related to communication efficiency which is acquired according to the position of the terminal 200 when executing the coordinated communication with the terminal 200 (for example, S183 in FIG. 7).

Accordingly, the base station 100 can determine whether or not to perform the coordinated communication on the basis of the past communication result even when the cell overlap condition is not correct, and therefore, in comparison with a case of determining only by the cell overlap condition, it is possible to increase the possibility of the execution of the coordinated communication with the terminal 200 which is located in the cell overlap region.

Therefore, in comparison with the case of executing the coordinated communication with the terminal 200 which is not located in the cell overlap region, by the execution of the coordinated communication with the terminal 200 which is located in the cell overlap region, the base station 100 can improve communication performance between the terminal 200 and the base station 100. As the communication performance, there are a throughput, a communication speed, a spectral efficiency, etc.

Further, the base station 100 is configured to perform the coordinated communication by selecting the type of which communication speed improvement rate is higher than others. Therefore, it is possible to improve a communication speed which is one of the communication performances at the terminal 200.

Further, in the terminal 200, because the coordinated communication is performed in the cell overlap region, it is possible to prevent an increase of power consumption to a constant or more, as compared to a case of executing handover for a plurality of times.

Additionally, for example, when the base station 100 starts the coordinated communication, there may be a case that, the base station 100 executes processing related to a preparation stage to start the coordinated communication between the plurality of base stations 100-1, 100-2 and the terminal 200. For example, there are processing to secure a radio resource to be used for the coordinated communication, processing to select the type of the coordinated communication, processing to transmit and receive information to establish the coordinated communication between the base stations and between each base station and the terminal, etc. Also, when the base station 100 completes the coordinated communication after starting the coordinated communication, there may be a case that a processing sequence is executed to change over to radio communication between the base station 100 and the terminal 200. The frequent execution of such processing in the base station 100 may cause an increased load in the base station 100 and also increased power consumption in the terminal 200.

In the present second embodiment, the coordinated communication is not performed if the communication speed can be improved by the non-execution of the coordinated communication in the cell overlap region, dependent on information related to the communication efficiency. Accordingly, it is possible to prevent a load increase in the base station 100 and the terminal 200 without the execution of the above-mentioned processing for the preparation stage and a processing sequence when changing over from the coordinated communication to the ordinary radio communication.

[Other embodiments]

Next, other embodiments will be described. In the second embodiment, the description has been given on the example that the base station 100 acquires position information and stores the acquired position information into the communication result storage unit 115 (for example, FIG. 8A and FIG. 18B). As to the position information, it may be possible that a measurement error is acquired and stored together, for example. FIG. 21 is a diagram illustrating an example that position information including a measurement error is stored in the communication result storage unit 115.

For example, when the measurement error is included, it may also be possible that the base station 100 is configured to exclude data which includes a measurement error larger than a constant value, from the calculation object of the communication speed improvement rate. This enables the base station 100 to achieve a high speed and increased efficiency in the calculation processing of the communication speed improvement rate and in the possibility/impossibility discrimination processing for the coordinated communication, as compared to the case of including all data as objects, for example.

For example, when the position information is calculated from the signal reception state data (for example, S15 in FIG. 5), in comparison of position information, calculated from the signal reception state data for two base stations, with position information, calculated from the signal reception state data for three base stations, a measurement error in the former is larger than a measurement error in the latter. The position information including the measurement error is calculated by means of a publicly known positioning technique, for example.

Also, in the second embodiment, the description has been given on the example that mainly two base stations 100-1, 100-2 perform the coordinated communication. As having been described in FIG. 15 also, in the second embodiment, it is possible to perform if two or more base stations capable of coordinated communication with a base station 100-A exist. In this case, the communication result storage unit 115 stores together information indicative of a base station with which the coordinated communication is performed, as depicted in FIG. 21, for example. The example of FIG. 21 is an example of the communication result storage unit 115 in the base station 100-A, and in the figure, the entry in the second row from the top illustrates an example in which the base station 100-A performs the coordinated communication with the base station 100-B using the type A. Also, the entry in the third row from the top in FIG. 21 illustrates an example in which the base station 100-A performs the coordinated communication with a base station B by the type A, and performs the coordinated communication with a base station C by the type B, respectively.

In such a case, for example, the communication result calculation unit 114 calculates a speed improvement rate on the basis of each object base station, and the coordinated communication control unit 113 selects the type which includes the maximum speed improvement rate on the basis of each object base station.

For example, as an example of the radio communication system 10 in which a plurality of base stations capable of coordinated communication with the base station 100-A exist, it is applicable to a HetNet (Heterogeneous Network). The HetNet is a network constituted by a variety of sizes of cells, such as a macro cell, a micro cell, a pico cell, etc. in a hierarchical configuration, for example. Such hierarchical configuration enables an improved overall capacity in the radio communication system 10.

Even in such a HetNet configuration, the above-mentioned coordinated communication can be performed in a similar manner to a case such that a plurality of base stations capable of coordinated communication with the base station 100-A exist. In this case also, for example, such information indicating that to which cell a certain cell performs the coordinated communication is stored together in the communication result storage unit 115, so that the speed improvement rate is calculated on the basis of each object base station, and the type of the maximum speed improvement rate is selected for each object base station.

Such a cell configuration can be achieved by the accommodation of a plurality of RRH 130 which include different cell range sizes in the same BBU as the base station 100, in such a manner that one RRH 132 configures a macro cell whereas another RRH 130 configures a micro cell.

Each configuration example of the base station 100 and the terminal 200 has been described exemplarily in FIG. 3 and FIG. 4, for example. FIG. 22A and FIG. 22B are diagrams illustrating other configuration examples of the base station 100 and the terminal 200, respectively.

A BBU 110 in the base station 100 includes a ROM (Read Only Memory) 120, a RAM (Random Access Memory) 121, a CPU (Central Processing Unit) 122, a memory 123 and a DSP (Digital Signal Processing) 124.

The ROM 120 stores a program which is executable in the CPU 122.

The RAM 121 includes a loaded program which is read out from the ROM 120 by the CPU 122, and also plays a role as a working memory when the program is executed by the CPU 122.

The CPU 122, by executing each program, executes a variety of functions, and executes such functions as the position information reception unit 112, the coordinated communication control unit 113 and the communication result calculation unit 114 in the second embodiment, for example. Accordingly, the CPU 122 corresponds to, for example, the position information reception unit 112, the coordinated communication control unit 113 and the communication result calculation unit 114.

The memory 123 stores data to be stored in the communication result storage unit 115 in the second embodiment, for example. Accordingly, the memory 123 corresponds to, for example, the communication result storage unit 115.

The DSP 124 performs digital signal processing by an instruction by the CPU 122, for example. The DSP 124 corresponds to, for example, the signal processing unit 111 in the second embodiment.

Also, the RRH 130 in the base station 100 further includes a radio processing unit 135. The radio processing unit 135 converts a signal which is output from the DSP 124 into a radio signal of a radio band, to output to the antenna 132, and also converts a radio signal which is output from the antenna 132 into a baseband signal, to output to the DSP 124. The radio processing unit 135 corresponds to, for example, the radio transmission and reception unit 131 in the second embodiment.

The terminal 200 further includes a ROM 211, a RAM 212, a CPU 213, a DSP 214 and a radio processing unit 210.

The CPU 213 reads out a program stored in the ROM 211 to load on the RAM 212, and executes the loaded program. Also, the CPU 213, when executing the program, appropriately accesses the RAM 212 to use as a working memory. The DSP 214 performs digital signal processing by an instruction from the CPU 213, for example.

For example, the CPU 213 corresponds to the position information transmitter unit 204 in the second embodiment, the DSP 214 corresponds to the signal processing unit 203 in the second embodiment, and the radio processing unit 210 corresponds to the radio transmission and reception unit 202 in the second embodiment.

REFERENCE SIGNS LIST

10: radio communication system
100 (100-1, 100-2): base station apparatus (base station)
110: BBU
111: signal processing unit
112: position information reception unit
113: coordinated communication control unit

114: communication result calculation unit
115: communication result storage unit
122: CPU
123: memory
130: RRH
131: radio transmission and reception unit
132: antenna
135: radio processing unit
200: terminal apparatus (terminal)
204: position information transmitter unit
213: CPU

**Claims**

1. A radio communication system comprising:

a first and second base stations apparatuses; and
a terminal apparatus, wherein
the first base station apparatus provides a radio communication service to the terminal apparatus in coordination with the second base station apparatus or without coordination with the second base station apparatus, and
the first base station apparatus includes:

a coordinated communication control unit configured to determine whether or not to provide a coordinated communication service coordinated with the second base station apparatus to a second terminal apparatus, based on information related to communication efficiency acquired according to a position of a first terminal apparatus on performing a coordinated communication to the first terminal apparatus; and
a signal processing unit configured to provide the radio communication service to the second terminal apparatus in coordination with the second base station apparatus or without coordination with the second base station apparatus according to the determination.

2. The radio communication system according to claim 1, wherein
the first base station apparatus includes:

a position estimation unit configured to estimate a position of the terminal apparatus; and
a storage unit configured to store and retain information related to the position of the first terminal apparatus on acquiring the information related to communication efficiency of the first terminal apparatus and the information related to communication efficiency in association with each other, and
the coordinated communication control units is configured to search the information related to communication efficiency stored and retained in the storage unit by using a position of the second terminal apparatus estimated by the position estimation unit, and determine whether or not to provide the coordinated communication service to the second terminal apparatus based on information related to communication efficiency according to a position of the second terminal apparatus.

3. The radio communication system according to claim 1, wherein
the information related to communication efficiency is information related to a communication speed of the first terminal apparatus, and
the coordinated communication control unit is configured to determine performing radio communication with the first or second terminal apparatus in coordination with the second base station apparatus, when a communication speed in a case of performing radio communication with the first or second terminal apparatus in coordination with the second base station apparatus is higher than a communication speed in a case of radio communication with the first or second terminal apparatus without coordination with the second base station apparatus.

4. The radio communication system according to claim 1, wherein
the information related to communication efficiency is information related to a communication speed of the first terminal apparatus, and
the coordinated communication control unit is configured to determine performing radio communication in coordination by a first type, when a communication speed in a case of performing radio communication in coordination by the first type is higher than a communication speed in a case of performing radio communication in coordination by a second type and a communication speed in a case of performing radio communication in coordination with the second base station apparatus by the first type is higher than a communication speed in a case of performing radio communication without coordination with the second base station apparatus.

**5.** The radio communication system according to claim 1, wherein
the information related to communication efficiency is information related to a communication speed of the first terminal apparatus, and
the coordinated communication control unit is configured to determine performing radio communication with the first or second terminal apparatus without coordination with the second base station apparatus, when a communication speed in a case of performing radio communication in coordination with the second base station apparatus is lower than a communication speed in a case of performing radio communication without coordination with the second base station apparatus, based on a result of the radio communication.

**6.** The radio communication system according to claim 3, wherein
the first base station apparatus includes:

a position estimation unit configured to estimate the position of the first terminal apparatus or a position of the second terminal apparatus; and
a communication result calculation unit configured to calculate a communication speed of the first or second terminal apparatus based on the information related to communication efficiency acquired according to the estimated position, and output the calculated communication speed to the coordinated communication control unit, and
the coordinated communication control units is configured to determine performing radio communication in coordination with the second base station apparatus based on the communication speed output from the communication result calculation unit.

**7.** The radio communication system according to claim 1, wherein
the coordinated communication control unit is configured to determine whether or not the first base station apparatus performs radio communication with the first or second terminal apparatus in coordination with the second base station apparatus, based on the information related to communication efficiency and a determination condition of whether or not the first or second terminal apparatus locates a radio communicable area overlapped with radio communicable areas of the first and second base station apparatuses.

**8.** The radio communication system according to claim 1, wherein
the first base station apparatus includes a position information reception unit configured to determine whether or not the first or second terminal apparatus locates in a radio communicable area overlapped with radio communicable areas of the first and second base station apparatus based on a signal reception condition of the first and second base station apparatuses transmitted from the first or second terminal apparatus, and
the coordinated communication control unit is configured to determine whether or not the first base station apparatus performs radio communication with the first or second terminal apparatus in coordination with the second base station apparatus, based on the information related to communication efficiency, when it is determined that the first or second terminal apparatus locates in the overlapped radio communicable area.

**9.** The radio communication system according to claim 1, wherein
the coordinated communication control unit is configured to complete performing radio communication in coordination with the second base station apparatus and perform radio communication without coordination with second base station apparatus, when the first base station apparatus performs radio communication in coordination with the second base station apparatus and when a communication speed in a case of performing radio communication in coordination with the second radio base station apparatus is lower than a communication speed in a case of performing radio communication without coordination with the second base station apparatus based on the information related to communication efficiency.

**10.** The radio communication system according to claim 1, wherein
the coordinated communication control unit is configured to perform radio communication in coordination with the second base station apparatus continuously, when the first base station apparatus performs radio communication in coordination with the second base station apparatus and when a communication speed in a case of performing radio communication in coordination with the second radio base station apparatus is same as a communication speed in a case of performing radio communication without coordination with the second base station apparatus based on the information related to communication efficiency.

11. The radio communication system according to claim 1, wherein
the coordinated communication control unit is configured to change from a first type to a second type and determine performing radio communication in coordination by the second type, when the first base station apparatus performs radio communication in coordination with the second base station apparatus by the first type and when a communication speed of the second type is higher than a communication speed of the first type and a communication speed in case of performing radio communication in coordination with the second base station apparatus by the second type is higher than a communication speed in a case of performing radio communication without coordination with the second base station apparatus.

12. The radio communication system according to claim 1, wherein
the first base station apparatus includes a position information reception unit configured to estimate a movement path of the first or second terminal apparatus based on a plurality of signal reception conditions of the first and second base station apparatuses transmitted from the first or second terminal apparatus, and
the coordinated communication control unit is configured to determine whether or not the first base station apparatus performs radio communication with the first or second terminal apparatus in coordination with the second base station apparatus, based on the information related to communication efficiency according to the estimated movement path of the first or second terminal apparatus, respectively.

13. The radio communication system according to claim 12, wherein
the coordinated communication control unit is configured to determine performing radio communication with the first or second terminal apparatus in coordination with the second base station apparatus, when an average value of a communication speed in a case of performing radio communication in coordination on an each position on the movement path is higher than an average value of a communication speed in a case of performing radio communication without coordination on the each position on the movement path, based on the information related to communication efficiency.

14. The radio communication system according to claim 12, wherein
the coordinated communication control unit is configured to determine performing radio communication in coordination by a first type, when a first average value of a communication speed on an each position on the movement path in case of performing radio communication in coordination by the first type is higher than a second average value of a communication speed on the each position of the movement path in a case of performing radio communication in coordination by the second type, and the first average value is higher than a third average value of a communication speed on the each position on the movement path in a case of performing radio communication without coordination, based on the information related to communication efficiency.

15. The radio communication system according to claim 12, wherein
the coordinated communication control unit is configured to determine performing radio communication without coordination with the second base station apparatus, when an average value of a communication speed in a case of performing radio communication in coordination on an each position on the movement path is lower than an average value of a communication speed in a case of performing radio communication without coordination on the each position on the movement path, based the information related to communication efficiency.

16. The radio communication system according to claim 12, wherein
the coordinated communication control unit is configured to complete performing radio communication in coordination with the second base station apparatus and determine performing radio communication without coordination, when the first base station apparatus performs radio communication in coordination with the second base station apparatus and when an average value of a communication speed in a case of performing radio communication in coordination on an each position on the movement path is lower than an average value of a communication speed in a case of performing radio communication without coordination on the each position on the movement path, based on the information related to communication efficiency.

17. The radio communication system according to claim 12, wherein
the coordinated communication control unit is configured to change from a first type to a second type and determine performing radio communication in coordination by the second type, when the first base station apparatus performs radio communication in coordination with the second base station apparatus by the first type and when a second average value of a communication speed on an each position on the movement path in a case of performing radio communication in coordination by the second type is higher than a first average value of a communication speed on the each position on the movement path in a case of performing radio communication in coordination by the first type and the second average value is higher than a third average value of a communication speed on the each position of the movement path in a case of performing radio communication without coordination, based on the information related to communication efficiency.

18. The radio communication system according to claim 1, wherein
the first base station apparatus includes a communication result storage unit configured to store the information related to communication efficiency,
the signal processing unit is configured to measure a first communication speed of data transmitted to or received from the first or second terminal apparatus in a case of performing radio communication in coordination with the second base station apparatus and a second communication speed of data transmitted to or received from the first or second terminal apparatus in a case of performing radio communication without coordination with the second base station apparatus, and
the coordinated communication control unit is configured to store in the communication result storage unit the first and second communication speeds and a position of the first or second terminal apparatus as the information related to communication efficiency, and determine whether or not the first base station apparatus performs radio communication in coordination with the second base station apparatus based on the first and second communication speeds according to the position.

19. The radio communication system according to claim 4, wherein
the coordinated communication control unit is configured to determine performing radio communication in coordination by the second type.

20. A base station apparatus for providing a radio communication service to a terminal apparatus in coordination with another base station apparatus or without coordination with the other base station apparatus, the base station apparatus comprising:

a coordinated communication control unit configured to determine whether or not to provide a coordinated communication service coordinated with the other base station apparatus to a second terminal apparatus, based on information related to communication efficiency acquired according to a position of a first terminal apparatus on performing coordinated communication to the first terminal apparatus; and
a signal processing unit configured to provide the radio communication service to the second terminal apparatus in coordination with the other base station apparatus or without coordination with the second base station apparatus according to the determination.

21. A radio communication method in a radio communication system for being able to provide by a first base station apparatus a radio communication service to a terminal apparatus in coordination with a second base station apparatus or without coordination with the second base station apparatus, the method comprising:

determining whether or not to provide a coordinated communication service coordinated with the second base station apparatus to a second terminal apparatus, based on information related to communication efficiency acquired according to a position of a first terminal apparatus on performing coordinated communication to the first terminal apparatus, and providing the radio communication service to the second terminal apparatus in coordination with the second base station apparatus or without coordination with the second base station apparatus according to the determination, by the first base station apparatus.

# FIG. 1

100-1

FIRST BASE STATION
APPARATUS

COORDINATED
COMMUNICATION
CONTROL UNIT — 150

SIGNAL
PROCESSING UNIT — 151-1

100-2

SECOND BASE STATION
APPARATUS

200-1

FIRST TERMINAL
APPARATUS

200-2

SECOND TERMINAL
APPARATUS

RADIO COMMUNICATION SYSTEM 10

FIG. 2

RADIO COMMUNICATION SYSTEM 10

FIG. 3

BASE STATION APPARATUS 100

110 BBU

130 RRH

114 COMMUNICATION RESULT CALCULATION UNIT

115 COMMUNICATION RESULT STORAGE UNIT

113 COORDINATED COMMUNICATION CONTROL UNIT

112 POSITION INFORMATION RECEPTION UNIT

111 SIGNAL PROCESSING UNIT

131 RADIO TRANSMISSION AND RECEPTION UNIT

132

BACKHAUL

# FIG. 4

200

TERMINAL APPARATUS

201

202

RADIO
TRANSMISSION
AND RECEPTION
UNIT

203

SIGNAL
PROCESSING UNIT

204

POSITION
INFORMATION
TRANSMISSION UNIT

FIG. 5

BASE STATION
(100-1)

TERMINAL
(200)

BASE STATION
(100-2)

S10

ORDINARY
(≠COORDINATED)
COMMUNICATION

MOVING IN A
COMMUNICATION STATE
(CELL A→CELL A/B OVERLAP) ~S11

NOTIFY A SIGNAL
RECEPTION STATE(S12)

DECIDE THAT A CELL
OVERLAP CONDITION
IS SATISFIED ~S13

START COORDINATED
COMMUNICATION START
DECISION PROCESSING ~S14

CALCULATE POSITION
INFORMATION FROM THE
SIGNAL RECEPTION STATE ~S15

MEASURE A
COMMUNICATION SPEED ~S16

SELECT A COORDINATED
COMMUNICATION TYPE ~S18

NOTIFY THE START OF
COORDINATED
COMMUNICATION

(S181)

(S182)

COORDINATED
COMMUNICATION
START PROCESSING
(S183–S185)

S19

COORDINATED
COMMUNICATION
START

S191

COORDINATED
COMMUNICATION
START

MEASURE A
COMMUNICATION SPEED ~S20

STORE A COMMUNICATION
RESULT OF THIS TIME
INTO A COMMUNICATION
RESULT STORAGE UNIT ~S21

# FIG. 6

```
┌─────────────────────────────┐
│     START COORDINATED        │
│       COMMUNICATION          │ ~S14
│ START DECISION PROCESSING    │
└─────────────────────────────┘
              │
              ▼
┌─────────────────────────────┐
│     CALCULATE POSITION       │ ~S15
│        INFORMATION           │
└─────────────────────────────┘
              │
              ▼
┌─────────────────────────────┐
│   MEASURE A COMMUNICATION    │
│   SPEED BEFORE THE START OF  │ ~S16
│   COORDINATED COMMUNICATION  │
└─────────────────────────────┘
              │
              ▼
┌─────────────────────────────┐
│    REFER TO A COMMUNICATION  │ ~S17
│   RESULT OF PRESENT POSITION │
└─────────────────────────────┘
              │
              ▼
┌─────────────────────────────┐
│   SELECT A TYPE OF HIGHEST   │
│       IMPROVEMENT RATE       │
│ (THE COORDINATED COMMUNICATION│ ~S18
│    IS NOT PERFORMED IF THE   │
│  IMPROVEMENT RATE IS MINUS)  │
└─────────────────────────────┘
              │
              ▼
┌─────────────────────────────┐
│    START THE COORDINATED     │ ~S19
│        COMMUNICATION         │
└─────────────────────────────┘
              │
              ▼
┌─────────────────────────────┐
│   MEASURE A COMMUNICATION    │
│   SPEED AFTER THE START OF   │ ~S20
│   COORDINATED COMMUNICATION  │
└─────────────────────────────┘
              │
              ▼
┌─────────────────────────────┐
│    STORE THE COMMUNICATION   │ ~S21
│      RESULT OF THIS TIME     │
└─────────────────────────────┘
              │
              ▼
(        END        ) ~S22
```

# FIG. 7

```
┌─────────────────────────────┐
│  TYPE SELECTION             │ ~S18
│  PROCESSING START           │
└─────────────────────────────┘
              │
              ▼
┌─────────────────────────────┐
│ CALCULATE COMMUNICATION SPEED│ ~S181
│ IMPROVEMENT RATE OF EACH TYPE│
└─────────────────────────────┘
              │
              ▼
┌─────────────────────────────┐
│ SELECT THE TYPE HAVING      │
│ MAXIMUM COMMUNICATION       │ ~S182
│ SPEED IMPROVEMENT RATE      │
└─────────────────────────────┘
              │
              ▼
        DOES                        S183
     THE SPEED
   IMPROVEMENT RATE                 NO
  OF THE SELECTED TYPE ─────────────────┐
    TAKE A POSITIVE                      │
       VALUE?                            │
        │ YES                            │
        ▼                                ▼
┌──────────────────────┐      ┌──────────────────────────┐
│ DETERMINE TO PERFORM │ S184 │ DETERMINE NOT TO PERFORME │ S185
│ THE COORDINATED      │      │ (OR TO COMPLETE) THE      │
│ COMMUNICATION USING  │      │ COORDINATED COMMUNICATION │
│ THE SELECTED TYPE    │      │ WHEN THE IMPROVEMENT RATE │
│ (OR THE TYPE AFTER   │      │ IS A NEGATIVE VALUE, OR   │
│ CHANGE)              │      │ CONTINUE A STATE WHEN THE │
│                      │      │ IMPROVEMENT RATE IS "ZERO"│
└──────────────────────┘      └──────────────────────────┘
        │                                │
        ◄────────────────────────────────┘
        │
        ▼
      TO S19
```

FIG. 8A

115

| DECISION TIME | TERMINAL IDENTIFIER | POSITION | SPEED AT NON-EXECUTION | SPEED DURING EXECUTING TYPE A | SPEED DURING EXECUTING TYPE B |
|---|---|---|---|---|---|
| yy/mm/dd hh:mm:s1 .sss | IDxxxx1 | xx1, yy1 | s1 | – | – |
| yy/mm/dd hh:mm:s2 .sss | IDxxxx2 | xx2, yy2 | s2 | s2+α2 | – |
| yy/mm/dd hh:mm:s3 .sss | IDxxxx3 | xx3, yy3 | – | s3+α3 | s3+β3 |
| ⋮ | ⋮ | ⋮ | ⋮ | ⋮ | ⋮ |

FIG. 8B

| POSITION INFORMATION | IMPROVEMENT RATE |
|---|---|
| xx1, yy1 | TYPE A: 20% |
| | TYPE B: −10% |

## FIG. 9

# FIG. 10

START COORDINATED
COMMUNICATION COMPLETION
DECISION PROCESSING ~S33

CALCULATE POSITION
INFORMATION ~S15

MEASURE A COMMUNICATION
SPEED BEFORE COMPLETION OF
THE COORDINATED COMMUNICATION ~S16

REFER TO A COMMUNICATION
RESULT OF PRESENT POSITION ~S17

SELECT A TYPE OF HIGHEST
IMPROVEMENT RATE
(THE COORDINATED COMMUNICATION
IS TERMINATED IF THE IMPROVEMENT
RATE IS MINUS) ~S34

COMPLETE THE COORDINATED
COMMUNICATION ~S35

MEASURE A COMMUNICATION
SPEED AFTER COMPLETION OF
THE COORDINATED COMMUNICATION ~S20

STORE THE COMMUNICATION
RESULT OF THIS TIME ~S21

END ~S36

## FIG. 11

# FIG. 12

```
┌─────────────────────────────┐
│   START OF COORDINATED      │
│   COMMUNICATION CHANGE      │~S52
│   DECISION PROCESSING       │
└─────────────────────────────┘
              │
              ▼
┌─────────────────────────────┐
│    CALCULATE POSITION       │~S15
│       INFORMATION           │
└─────────────────────────────┘
              │
              ▼
┌─────────────────────────────┐
│  COMMUNICATION SPEED BEFORE │
│   CHANGE OF COORDINATED     │~S16
│       COMMUNICATION         │
└─────────────────────────────┘
              │
              ▼
┌─────────────────────────────┐
│   REFER TO A COMMUNICATION  │~S17
│  RESULT OF PRESENT POSITION │
└─────────────────────────────┘
              │
              ▼
┌─────────────────────────────┐
│   SELECT A TYPE OF HIGHEST  │
│      IMPROVEMENT RATE       │
│ (THE COORDINATED COMMUNICATION│~S53
│   IS NOT PERFORMED IF THE   │
│  IMPROVEMENT RATE IS MINUS) │
└─────────────────────────────┘
              │
              ▼
┌─────────────────────────────┐
│   CHANGE THE COORDINATED    │~S54
│       COMMUNICATION         │
└─────────────────────────────┘
              │
              ▼
┌─────────────────────────────┐
│   MEASURE A COMMUNICATION   │
│   SPEED AFTER CHANGE OF     │~S20
│  COORDINATED COMMUNICATION  │
└─────────────────────────────┘
              │
              ▼
┌─────────────────────────────┐
│   STORE THE COMMUNICATION   │~S21
│     RESULT OF THIS TIME     │
└─────────────────────────────┘
              │
              ▼
╭─────────────────────────────╮
│            END              │~S55
╰─────────────────────────────╯
```

## FIG. 13

BASE STATION (100-1)    TERMINAL (200)    BASE STATION (100-2)

S10

ORDINARY (≠COORDINATED) COMMUNICATION

MOVING IN A COMMUNICATION STATE (CELL A→CELL A/B OVERLAP) ~S11

NOTIFY THE SIGNAL RECEPTION STATE(S12)

DECIDE THAT A CELL OVERLAP CONDITION IS SATISFIED ~S13

START COORDINATED COMMUNICATION START DECISION PROCESSING ~S14

(S71) REQUEST SIGNAL RECEPTION STATE NOTIFICATION

(S72) NOTIFY SIGNAL RECEPTION STATE.

(S73) REQUEST SIGNAL RECEPTION STATE NOTIFICATION

(S74) NOTIFY SIGNAL RECEPTION STATE

CALCULATE THE POSITION INFORMATION FROM THE SIGNAL RECEPTION STATE ~S75

MEASURE A COMMUNICATION SPEED ~S16

SELECT A COORDINATED COMMUNICATION TYPE ~S78

NOTIFY START OF COORDINATED COMMUNICATION.

(S182) (S181)

COORDINATED COMMUNICATION START PROCESSING (S183-S185)

COORDINATED COMMUNICATION START ~S19

COORDINATED COMMUNICATION START ~S191

MEASURE A COMMUNICATION SPEED ~S20

STORE A COMMUNICATION RESULT OF THIS TIME INTO A COMMUNICATION RESULT STORAGE UNIT ~S21

# FIG. 14

START COORDINATED
COMMUNICATION
START DECISION PROCESSING — S14

REQUEST A PLURALITY OF TIMES
OF SIGNAL RECEPTION STATE
NOTIFICATIONS — S70

CALCULATE A PLURALITY OF
TIMES OF POSITION INFORMATION — S75

A COMMUNICATION
SPEED BEFORE START OF
COORDINATED COMMUNICATION — S16

ESTIMATE A MOVEMENT PATH
IN A CONSTANT PERIOD BASED
ON THE POSITION INFORMATION — S76

REFER TO A COMMUNICATION
RESULT OF ESTIMATED PATH — S77

SELECT A TYPE OF
HIGHEST IMPROVEMENT RATE
IN THE ESTIMATED ROUTE
(THE COORDINATED COMMUNICATION
IS NOT PERFORMED IF THE
IMPROVEMENT RATE IS MINUS) — S78

START THE COORDINATED
COMMUNICATION — S19

MEASURE A COMMUNICATION
SPEED AFTER START OF
COORDINATED COMMUNICATION — S20

STORE THE COMMUNICATION
RESULT OF THIS TIME — S21

END — S22

# FIG. 15

RADIO COMMUNICATION SYSTEM 10

# FIG. 16

```
┌──────────────────────────────┐
│   START OF TYPE SELECTION     │ ~S78
│        PROCESSING             │
└──────────────────────────────┘
              │
              ▼
┌──────────────────────────────┐
│   CALCULATE AN AVERAGE        │ ~S781
│ COMMUNICATION SPEED IMPROVEMENT│
│     RATE OF EACH TYPE         │
└──────────────────────────────┘
              │
              ▼
┌──────────────────────────────┐
│   SELECT A TYPE OF MAXIMUM    │ ~S782
│    AVERAGE COMMUNICATION       │
│   SPEED IMPROVEMENT RATE       │
└──────────────────────────────┘
              │
              ▼
```

DOES AN AVERAGE COMMUNICATION SPEED IMPROVEMENT RATE OF SELECTED TYPE TAKE A POSITIVE VALUE? — S783

NO

YES

S784 — DETERMINE TO PERFORME THE COORDINATED COMMUNICATION USING SELECTED TYPE (OR THE SYSTEM AFTER CHANGE)

S785 — DETERMINE NOT TO PERFORME (OR TO COMPLETE) THE COORDINATED COMMUNICATION WHEN IMPROVEMENT RATE IS A NEGATIVE VALUE, OR CONTINUE STATE WHEN IMPROVEMENT RATE IS "ZERO"

TO S19

# FIG. 17A

SPEED

Ca

Cb

Cc

Sa

Sb

Sc

Ta

Tb

Tc

TIME

# FIG. 17B

SPEED

C

S

T

TIME

FIG. 18A

| ROUTE INFORMATION | IMPROVEMENT RATE |
|---|---|
| xx1, yy1 ↓ xx2.yy2 ↓ xx3,yy3 | TYPE A: 20% |
|  | TYPE B: −10% |

115

FIG. 18B

| DECISION TIME | TERMINAL IDENTIFIER | POSITION | SPEED AT NON-EXECUTION | SPEED DURING EXECUTING TYPE A | SPEED DURING EXECUTING TYPE B |
|---|---|---|---|---|---|
| yy/mm/dd hh:mm:s1 .sss | IDxxxx1 | xx1, yy1 | s1 | − | − |
| yy/mm/dd hh:mm:s2 .sss | IDxxxx2 | xx2, yy2 | s2 | $s2+\alpha2$ | − |
| yy/mm/dd hh:mm:s3 .sss | IDxxxx3 | xx3, yy3 | − | $s3+\alpha3$ | $s3+\beta3$ |
| ⋮ | ⋮ | ⋮ | ⋮ | ⋮ | ⋮ |

# FIG. 19

```
┌─────────────────────────────┐
│  START OF COORDINATED       │
│  COMMUNICATION DECISION     │~S33
│  PROCESSING                 │
└─────────────────────────────┘
            │
            ▼
┌─────────────────────────────┐
│  REQUEST SIGNAL RECEPTION    │~S70
│  STATE NOTIFICATION.         │
└─────────────────────────────┘
            │
            ▼
┌─────────────────────────────┐
│  CALCULATE POSITION INFORMATION │~S75
│  FOR A PLURALITY OF TIMES       │
└─────────────────────────────┘
            │
            ▼
┌─────────────────────────────┐
│  COMMUNICATION SPEED BEFORE  │
│  COMPLETION OF COORDINATED   │~S16
│  COMMUNICATION               │
└─────────────────────────────┘
            │
            ▼
┌─────────────────────────────┐
│  ESTIMATE A MOVEMENT PATH    │
│  IN A CONSTANT PERIOD, BASED │~S76
│  ON POSITION INFORMATION     │
└─────────────────────────────┘
            │
            ▼
┌─────────────────────────────┐
│  REFER TO AN AVERAGE COMMUNICATION │
│  RESULT IMPROVEMENT RATE           │~S77
│  OF THE ESTIMATED PATH             │
└─────────────────────────────┘
            │
            ▼
┌─────────────────────────────┐
│  SELECT A TYPE OF HIGHEST    │
│  IMPROVEMENT RATE ON THE     │
│  ESTIMATED PATH              │
│  (THE COORDINATED COMMUNICATION │~S34
│  IS NOT PERFORMED IF THE     │
│  IMPROVEMENT RATE IS MINUS)  │
└─────────────────────────────┘
            │
            ▼
┌─────────────────────────────┐
│  START THE COORDINATED       │~S35
│  COMMUNICATION               │
└─────────────────────────────┘
            │
            ▼
┌─────────────────────────────┐
│  MEASURE A COMMUNICATION     │
│  SPEED AFTER COMPLETION OF   │~S20
│  COORDINATED COMMUNICATION   │
└─────────────────────────────┘
            │
            ▼
┌─────────────────────────────┐
│  STORE THE COMMUNICATION     │~S21
│  RESULT OF THIS TIME         │
└─────────────────────────────┘
            │
            ▼
┌─────────────────────────────┐
│            END               │~S36
└─────────────────────────────┘
```

# FIG. 20

START OF COORDINATED
COMMUNICATION CHANGE
DECISION PROCESSING ~S52

REQUEST SIGNAL RECEPTION
STATE NOTIFICATION. ~S70

CALCULATE POSITION INFORMATION
FOR A PLURALITY OF TIMES ~S75

COMMUNICATION SPEED BEFORE
CHANGE OF COORDINATED
COMMUNICATION ~S16

ESTIMATE A MOVEMENT PATH
IN A CONSTANT PERIOD, BASED
ON THE POSITION INFORMATION ~S76

REFER TO AN AVERAGE COMMUNICATION
RESULT IMPROVEMENT RATE
OF THE ESTIMATED ROUTE ~S77

SELECT A TYPE OF HIGHEST
IMPROVEMENT RATE ON THE
ESTIMATED PATH
(THE COORDINATED COMMUNICATION
IS NOT PERFORMED IF THE
IMPROVEMENT RATE IS MINUS) ~S53

CHANGE THE COORDINATED
COMMUNICATION ~S54

MEASURE A COMMUNICATION
SPEED AFTER CHANGE OF
COORDINATED COMMUNICATION ~S20

STORE THE COMMUNICATION
RESULT OF THIS TIME ~S21

END ~S55

FIG. 21

115

| DECISION TIME | TERMINAL IDENTIFIER | POSITION, ACCURACY | SPEED AT NON-EXECUTION | OBJECT BASE STATION B | | OBJECT BASE STATION C | |
|---|---|---|---|---|---|---|---|
| | | | | SPEED DURING EXECUTING TYPE A | SPEED DURING EXECUTING TYPE B | SPEED DURING EXECUTING TYPE A | SPEED DURING EXECUTING TYPE B |
| yy/mm/dd hh:mm:s1 .sss | IDxxxx1 | xx1, yy1±e1 | s1 | – | – | – | – |
| yy/mm/dd hh:mm:s2 .sss | IDxxxx2 | xx2, yy2±e2 | s2 | s2+α2 | – | – | – |
| yy/mm/dd hh:mm:s3 .sss | IDxxxx3 | xx3, yy3±e3 | – | s3+α3 | – | – | s3+β3 |
| ⋮ | ⋮ | ⋮ | ⋮ | ⋮ | ⋮ | ⋮ | ⋮ |

# FIG. 22A

100

BASE STATION APPARATUS

110 BBU

130 RRH

121 RAM

122 CPU

120 ROM

123 MEMORY

124 DSP

135 RADIO PROCESSING UNIT

132

# FIG. 22B

TERMINAL APPARATUS

201

210 RADIO PROCESSING UNIT

212 RAM

213 CPU

214 DSP

211 ROM

## INTERNATIONAL SEARCH REPORT

| International application No. |
|---|
| PCT/JP2013/074349 |

**A. CLASSIFICATION OF SUBJECT MATTER**
*H04W28/16(2009.01)i*

According to International Patent Classification (IPC) or to both national classification and IPC

**B. FIELDS SEARCHED**

Minimum documentation searched (classification system followed by classification symbols)
H04B7/24-7/26, H04W4/00-99/00

Documentation searched other than minimum documentation to the extent that such documents are included in the fields searched
Jitsuyo Shinan Koho          1922-1996    Jitsuyo Shinan Toroku Koho    1996-2013
Kokai Jitsuyo Shinan Koho    1971-2013    Toroku Jitsuyo Shinan Koho    1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2010/150898 A1 (Kyocera Corp.), 29 December 2010 (29.12.2010), paragraphs [0121] to [0139] & US 2012/0099512 A1 | 1-21 |
| A | WO 2010/125635 A1 (Hitachi, Ltd.), 04 November 2010 (04.11.2010), paragraphs [0116] to [0128] & US 2012/0087265 A1    & CN 102415137 A | 1-21 |
| A | JP 2013-533697 A (ZTE Corp.), 22 August 2013 (22.08.2013), paragraphs [0031] to [0049] & EP 2590450 A1         & WO 2012/000252 A1 & CN 102316510 A | 1-21 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 October, 2013 (24.10.13) | 05 November, 2013 (05.11.13) |

| Name and mailing address of the ISA/ Japanese Patent Office | Authorized officer |
|---|---|
| Facsimile No. | Telephone No. |

Form PCT/ISA/210 (second sheet) (July 2009)

**REFERENCES CITED IN THE DESCRIPTION**

**Patent documents cited in the description**

- JP 2012204971 A
- JP 2011182063 A